(19) Europäisches Patentamt
European Patent Office
Office européen des brevets

(11) **EP 2 010 864 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(21) Anmeldenummer: **07724654.4**

(22) Anmeldetag: **19.04.2007**

(51) Int Cl.:
***G01B 21/04*** (2006.01)

(86) Internationale Anmeldenummer:
**PCT/EP2007/003724**

(87) Internationale Veröffentlichungsnummer:
**WO 2007/122012 (01.11.2007 Gazette 2007/44)**

(54) **SCANNING EINER OBERFLÄCHE MIT EINEM KOORDINATENMESSGERÄT**

SCANNING A SURFACE USING A COORDINATE MEASURING MACHINE

SCANNERISATION D'UNE SURFACE AVEC UN APPAREIL DE MESURE DE COORDONNEES

(84) Benannte Vertragsstaaten:
**DE FR GB IT**

(30) Priorität: **24.04.2006 DE 102006019382**

(43) Veröffentlichungstag der Anmeldung:
**07.01.2009 Patentblatt 2009/02**

(73) Patentinhaber: **Carl Zeiss Industrielle Messtechnik GmbH**
**73447 Oberkochen (DE)**

(72) Erfinder:
• **FUCHS, Andreas**
 **73492 Rainau (DE)**
• **BURGER, Jochen**
 **89522 Heidenheim (DE)**
• **DEEG, Hermann**
 **73434 Aalen (DE)**

(74) Vertreter: **Brunotte, Joachim Wilhelm Eberhard**
**Patentanwälte Bressel und Partner**
**Radickestrasse 48**
**12489 Berlin (DE)**

(56) Entgegenhaltungen:
**WO-A-00/62015          DE-A1- 3 523 188**
**DE-A1-102004 038 416**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Antasten einer Werkstück-Oberfläche mit einem Koordinatenmessgerät und ein Koordinatenmessgerät, welches insbesondere zur Ausführung des Verfahrens ausgestaltet ist. Die Erfindung umfasst ferner eine Ermittlungseinrichtung zur Ermittlung eines Wertes einer Bewegungsgeschwindigkeit des Koordinatenmessgeräts.

Koordinatenmessgeräte werden eingesetzt, um Koordinaten von Oberflächenpunkten eines Werkstücks zu messen. Z. B. weist ein herkömmliches Koordinatenmessgerät eine Werkstückhalterung zum Halten des zu vermessenen Werkstücks in einer Messposition und ein Tastelement zum Antasten der Oberfläche des Werkstücks auf. Im Einzelnen kann das Koordinatenmessgerät mehrere relativ zueinander verlagerbare Komponenten aufweisen, von denen zumindest eine mit der Werkstückhalterung fest verbunden ist und von denen zumindest eine andere das Tastelement trägt, wobei eine Mehrzahl von Antrieben für die Komponenten vorgesehen sind, um das Tastelement relativ zu der Werkstückhalterung zu verlagern (d.h. zu bewegen). Das Tastelement wird beispielsweise von einem Messkopf gehalten. Es kann ferner einen Taster aufweisen. Beim Antasten der Werkstückoberfläche wird das Tastelement mit der Oberfläche in Kontakt gebracht. Bei hergestelltem Kontakt zwischen dem Tastelement und der Oberfläche können die Koordinaten des oder der Punkte gemessen werden, mit denen das Tastelement (das beispielsweise kugelförmig ist) in Kontakt ist.

Mit Scanning wird ein spezieller Antastmodus bezeichnet, bei welchem Messpunkte fortlaufend aufgenommen werden, um z. B. Linien auf der Oberfläche zu vermessen. Während des Scanning wird das Tastelement auf einem Scanning-Weg bewegt, wobei das Tastelement seinen Kontakt mit der Oberfläche des Werkstücks beibehält.

Insbesondere kann das Scanning gemäß der vorliegenden Erfindung, wie aus dem Stand der Technik bekannt, mit einem Tastelement ausgeführt, welches zum Beispiel eine Kugel hat, die an der Oberfläche des zu scannenden Gegenstandes entlang geführt wird. Dabei tritt eine Auslenkung (in Bezug auf den Messkopf) der Kugel aus ihrer Null- oder Ruhelage auf. Außerdem tritt aufgrund der Auslenkung eine Rückstellkraft auf, die den mechanischen Kontakt zwischen der Kugel und dem Gegenstand gewährleistet. Aus der momentanen Position des Tastelements und aus der Auslenkung, die insbesondere bezüglich der Ruhelage der Kugel in alle möglichen Richtungen festgestellt werden kann, wird berechnet, an welchem Ort des Koordinatensystems die Kugel den Gegenstand berührt. Die Auslenkung wird über entsprechende Wegaufnehmer am Tastelement erfasst.

Auf dem Scanning-Weg wird das Tastelement mit einer Scanning-Geschwindigkeit bewegt. Grundsätzlich kann die Scanning-Geschwindigkeit variieren, d. h. es treten während der Scanning-Bewegung Beschleunigungen und/oder Verzögerungen auf. Die Geschwindigkeitsänderungen können jedoch zu Schwingungen des Gesamtsystems aus Werkstück und Koordinatenmessgerät führen, wodurch Messfehler entstehen.

Aufgrund der verschiedenen Antriebe besitzt ein Koordinatenmessgerät häufig unterschiedliche maximal mögliche und/oder maximal zulässige Geschwindigkeiten in Bezug auf die einzelnen Freiheitsgrade der Bewegung des Tastelements. Unter einem Freiheitsgrad der Bewegung wird meist die Bewegungsmöglichkeit in oder parallel zu einer Linearachse verstanden. Z. B. hat ein Koordinatenmessgerät drei voneinander unabhängige lineare Freiheitsgrade der Bewegung, wenn das Tastelement zumindest innerhalb eines bestimmten Messbereichs in beliebige Richtungen bewegt werden kann. Diese drei voneinander unabhängigen Linearachsen werden üblicherweise als die Koordinatenachsen X, Y und Z eines kartesischen Koordinatensystems definiert. Da das Tastelement, bzw. der Punkt des Tastelements, der mit der Werkstückoberfläche in Kontakt kommt, als punktförmig angenommen werden kann und sich die Orientierung des Tastelements bezüglich eines Koordinatensystems, in dem das Werkstück in Ruhe ist, während des Antastens üblicherweise nicht ändert, brauchen weitere Freiheitsgrade der Bewegung, insbesondere rotatorische Freiheitsgrade, nicht betrachtet zu werden. Die Erfindung ist jedoch nicht auf solche Koordinatenmessgeräte bzw. Messanordnungen beschränkt. Insbesondere kann das Koordinatenmessgerät auch über weniger als drei voneinander unabhängige Freiheitsgrade der Bewegung verfügen und/oder kann zumindest einer der Freiheitsgrade ein rotatorischer Freiheitsgrad sein, d. h. das Tastelement kann z. B. durch eine Drehbewegung um eine Drehachse eines Antriebs auf einer Kreisbahn geführt werden.

DE-A-35 23 188 beschreibt ein Verfahren zum scannenden Vermessen eines Werkstücks. Dabei wird mit einer Koordinatenmessmaschine, die drei lineare Bewegungsachsen aufweist, entlang welchen bedingt durch die Leistung der Antriebsmotoren entsprechende Höchstgeschwindigkeiten möglich sind, ein Werkstück scannend entlang eines vorgegebenen Scanning-Weges mit konstanter Scanning-Geschwindigkeit vermessen, um geschwindigkeitsabhängige Reibungsfehler zu vermeiden.

Es ist eine Aufgabe der vorliegenden Erfindung, ein Verfahren und ein Koordinatenmessgerät der eingangs genannten Art anzugeben, die es erlauben, beim Scanning die Messdauer möglichst kurz zu halten. Dabei sollen Messfehler verhindert werden und es sollen Messanordnungen berücksichtigt werden, bei denen das Koordinatenmessgerät bzw. das Tastelement bezüglich verschiedener Freiheitsgrade der Bewegung verschiedene maximale Geschwindigkeitsbeträge aufweist. Unter einem maximalen Geschwindigkeitsbetrag eines Freiheitsgrades wird verstanden, dass bei einer Bewegung ausschließlich in der durch den Freiheitsgrad definierten Richtung der zugehörige maximale Geschwindigkeitsbetrag nicht überschritten werden darf oder kann.

Ein Grundgedanke der vorliegenden Erfindung besteht darin, unter Berücksichtigung des jeweils durch das Tastelement zu durchfahrenden Scanning-Weges zu ermitteln, welchen konstanten, maximal zulässigen Betrag der Scanning-Geschwindigkeit das Tastelement haben darf, wobei die maximalen Geschwindigkeitsbeträge für die einzelnen Freiheitsgrade der Bewegung unterschiedlich sein können. Dem liegt die Erkenntnis zugrunde, dass für dieselbe Form des Scanning-Weges je nach Lage und Orientierung des Scanning-Weges in der Messanordnung verschiedene maximale Beträge der Scanning-Geschwindigkeit resultieren können. Anders ausgedrückt: Ist der maximale Geschwindigkeitsbetrag für einen bestimmten Freiheitsgrad geringer als die maximalen Geschwindigkeitsbeträge für den oder die anderen Freiheitsgrade, kommt es darauf an, ob auf dem Scanning-Weg Punkte oder Strecken liegen, in denen bzw. entlang denen der Scanning-Weg weitgehend oder ausschließlich in die durch den bestimmten Freiheitsgrad definierte Bewegungsrichtung verläuft. Ist dies der Fall, wird es den maximalen Betrag der Scanning-Geschwindigkeit stärker zu niedrigeren Werten hin limitieren, als in anderen Fällen. Die Verhältnisse werden dabei noch komplexer, wenn für alle Freiheitsgrade der Bewegung verschiedene maximale Geschwindigkeitsbeträge definiert sind.

Außerdem können für bestimmte Messbereiche, d. h. Bereiche der Messanordnung, in denen sich das Tastelement befindet, auch für denselben Freiheitsgrad verschiedene maximale Geschwindigkeitsbeträge definiert sein. Ein möglicher Grund hierfür ist z. B. das Vorhandensein eines Sicherheitsbereichs, in dem die Bewegung des Tastelements stärker limitiert ist als in anderen Bereichen.

Insbesondere wird ein Verfahren zum Antasten einer Werkstück-Oberfläche eines Koordinatenmessgeräts vorgeschlagen, wobei das Verfahren Folgendes aufweist:

- wobei ein Tastelement des Koordinatenmessgeräts mit der Oberfläche in Kontakt gebracht wird und das Tastelement unter Beibehaltung des Kontakts entlang der Oberfläche bewegt wird (Scanning),

- wobei das Koordinatenmessgerät eine Mehrzahl von voneinander unabhängigen Freiheitsgraden, z. B. Freiheitsgrade von Linearachsen, der möglichen Bewegungen des Tastelements bezüglich dem Werkstück aufweist und wobei für die Freiheitsgrade maximale Geschwindigkeitsbeträge definiert sind, die das Maximum einer Bewegungsgeschwindigkeitskomponente des Tastelements bezogen auf den jeweiligen Freiheitsgrad beschreiben,

- wobei für ein geplantes Scanning des Werkstücks ein geschätzter Weg (Scanning-Weg) vorgegeben wird oder ist, auf dem sich das Tastelement beim Scanning bewegen soll, und wobei der tatsächliche Scanning-Weg abhängig von tatsächlichen Abmessungen des Werkstücks von dem geschätzten Scanning-Weg abweichen kann und

- wobei unter Berücksichtigung der maximalen Geschwindigkeitsbeträge für die verschiedenen Freiheitsgrade ein maximaler Betrag der Scanning-Geschwindigkeit ermittelt wird, mit dem der geschätzte Scanning-Weg bei konstantem Betrag der Geschwindigkeit des Tastelements durchfahren werden kann.

Das erfindungsgemäße Verfahren hat den Vorteil, dass nicht der Freiheitsgrad mit dem niedrigsten maximalen Geschwindigkeitsbetrag automatisch den maximalen Betrag der Scanning-Geschwindigkeit bestimmt. Vielmehr kann für einen konkret vorgegebenen geschätzten Scanning-Weg ermittelt werden, ob eine höhere Scanning-Geschwindigkeit möglich ist und der Betrag der Scanning-Geschwindigkeit dennoch über den gesamten Scanning-Weg konstant gehalten werden kann. Außerdem ist es möglich, einen anderen Scanning-Weg zu wählen oder (beispielsweise durch veränderte Orientierung und/oder Positionierung des Werkstücks relativ zu dem Koordinatenmessgerät) einen Scanning-Weg mit gegebener Form anders im Messbereich anzuordnen. Bei dieser anderen Anordnung kann der maximale Betrag der Scanning-Geschwindigkeit höher sein. Insbesondere ist es möglich, aufgrund der Ergebnisse des erfindungsgemäßen Verfahrens bei einer gegebenen Form eines Scanning-Weges den Scanning-Weg so anzuordnen, dass der für alle möglichen Anordnungen höchstmögliche maximale Betrag der Scanning-Geschwindigkeit erzielt wird. Dies ist insbesondere dann von besonderem Vorteil, wenn im Rahmen einer Serienfertigung von Werkstücken immer wieder baugleiche Werkstücke von dem Koordinatenmessgerät vermessen werden sollen.

Auch wenn als Ergebnis des erfindungsgemäßen Verfahrens der maximale Betrag der Scanning-Geschwindigkeit ermittelt wird, so kann dennoch das Tastelement beim Scanning mit einem niedrigeren konstanten Betrag der Geschwindigkeit bewegt werden. Ein möglicher Grund hierfür ist, dass z. B. eine Geschwindigkeitsreserve von 10 % beibehalten werden soll, d. h. die Geschwindigkeit um 10 % erhöht werden können soll, ohne den maximalen Betrag der Scanning-Geschwindigkeit zu überschreiten.

Insbesondere kann zumindest einer der Freiheitsgrade ein Freiheitsgrad einer Linearachse des Koordinatenmessgeräts sein. In diesem Fall können bei einer bevorzugten Ausführungsform des Verfahrens alle Punkte auf dem geschätzten Scanning-Weg berücksichtigt werden, die ein lokales Maximum der partiellen Ableitung des Betrages einer Koordinate nach dem Weg aufweisen (diese Punkte werden im Folgenden als Extrempunkte bezeichnet), wobei die Koordinate eine Ortskoordinate ist, die bezüglich einer Koordinatenachse definiert ist, die die Linearachse ist oder die parallel zu der Linearachse verläuft, und wobei der maximale Betrag der Scanning-Geschwindigkeit so festgelegt wird, dass der Betrag der Geschwindigkeitskomponente bezüglich der Koordinatenachse in keinem der ermittelten Extrempunkte den maximalen Geschwindigkeitsbetrag des Freiheitsgrades überschreitet. Eine Ermittlung der Ortskoordinaten der Extrempunkte ist nicht zwingend erforderlich. Vielmehr können die Extrempunkte oder daraus abgeleitete Informationen auch indirekt bestimmt werden.

Unter einem lokalen Maximum wird verstanden, dass vor und nach dem Extrempunkt andere Punkte auf dem Scanning-Weg liegen, die eine kleinere Ableitung des Betrages der Koordinate nach dem Weg aufweisen. Dabei ist es im Allgemeinen möglich, dass derselbe Punkt auf dem Weg ein Extrempunkt bezüglich mehr als eines Freiheitsgrades ist. Auch können z. B. über einen Abschnitt des Scanning-Weges alle Punkte Extrempunkte bezüglich eines Freiheitsgrades sein, wenn der Abschnitt z. B. geradlinig ist. Eine Ausnahme bildet die Situation, dass der Anfangspunkt oder der Endpunkt des Scanning-Weges betrachtet wird. In diesem Fall reicht es für ein lokales Maximum der Ableitung aus, wenn im weiteren Verlauf des Weges bzw. im Verlauf vor dem Endpunkt die Ableitung des Betrages der Koordinate nach dem Weg geringer ist.

Bei der Koordinate handelt es sich um eine Ortskoordinate, die bezüglich einer Koordinatenachse definiert ist, die die Linearachse ist oder die parallel zu der Linearachse verläuft. Bei dieser bevorzugten Ausführungsform des Verfahrens wird der maximale Betrag der Scanning-Geschwindigkeit so festgelegt, dass der Betrag der Geschwindigkeitskomponente bezüglich der Koordinatenachse in keinem der ermittelten Extrempunkte den maximalen Geschwindigkeitsbetrag des Freiheitsgrades überschreitet.

Vorzugsweise werden die Extrempunkte jeweils separat für alle Freiheitsgrade des Koordinatenmessgeräts bestimmt und wird der maximale Betrag der Scanning-Geschwindigkeit so festgelegt, dass der jeweilige Betrag der Geschwindigkeitskomponente bezüglich der jeweiligen Koordinatenachse in keinem der ermittelten Extrempunkte den maximalen Geschwindigkeitsbetrag des jeweiligen Freiheitsgrades überschreitet.

Der bevorzugten Ausführungsform liegt der Gedanke zugrunde, dass lediglich die Extrempunkte für die Festlegung bzw. Bestimmung des maximalen Betrages der Scanning-Geschwindigkeit betrachtet werden müssen. Dabei kann sogar die Auswertung eines Teils der Extrempunkte ausreichen, z. B. wenn der Scanning-Weg eine Kreisbahn ist. Es ist also insbesondere nicht erforderlich, die Geschwindigkeitskomponenten (der Begriff "Komponente" bezieht sich auf eine zugeordnete Koordinatenachse) für jeden Punkt auf dem Scanning-Weg daraufhin auszuwerten, ob die Geschwindigkeitskomponente größer ist als der maximale Geschwindigkeitsbetrag des zugehörigen Freiheitsgrades bzw. der zugehörigen Koordinatenachse. Aus diesem Grund kann erheblicher Rechenaufwand eingespart werden und ist es möglich, in vertretbarer Zeit eine Vorausplanung der Vermessung eines Werkstücks durchzuführen.

Derjenige Teil des Verfahrens, der die Berechnung des maximalen Betrages der Scanning-Geschwindigkeit zum Inhalt hat, kann insbesondere automatisch von einer Recheneinheit ausgeführt werden, die z. B. Teil einer Steuereinrichtung zur Steuerung des Betriebes des Koordinatenmessgeräts sein kann und/oder mit der Steuereinrichtung verbunden sein kann. Der Recheneinheit, die z. B. als Mikrocomputer ausgeführt ist, wobei der entsprechende Rechenalgorithmus in Hardware und/oder Software implementiert sein kann, ist z. B. eine Schnittstelle zugeordnet, über die die Recheneinheit Daten einlesen kann, die den geschätzten Scanning-Weg beschreiben.

Zum Umfang der Erfindung gehört ebenfalls ein Koordinatenmessgerät, das insbesondere zur Ausführung des Verfahrens in einer der Ausgestaltungen fähig ist, welche in dieser Beschreibung beschrieben werden. Insbesondere kann das Koordinatenmessgerät die erwähnte Steuereinrichtung und/oder die Recheneinheit aufweisen.

Bei der Ermittlung der zuvor erwähnten Extrempunkte ist es von Vorteil, wenn der geschätzte Scanning-Weg einen runden Verlauf aufweist, insbesondere kreisbogenförmig, helixförmig, spiralförmig, ellipsenbogenförmig oder oval ist. Bei den aufgezählten konkreten Formen eines runden Verlaufs kann es nicht vorkommen, dass ein ganzer Abschnitt des Scanning-Weges aus Extrempunkten besteht, außer wenn sich eine Koordinate entlang dem runden Verlauf überhaupt nicht ändert und daher für die Berechnung des maximalen Betrages der Scanning-Geschwindigkeit außer Betracht bleiben kann. Letzteres ist beispielsweise dann der Fall, wenn bei einem kreisförmigen Scanning-Weg die außer Acht zu lassende Koordinate bezüglich einer Koordinatenachse definiert ist, die senkrecht zu der Ebene des Kreises steht. Ferner kann es insbesondere bei kreisbogenförmigem oder helixförmigem Verlauf nicht vorkommen, dass derselbe Punkt ein Extrempunkt bezüglich verschiedener, voneinander unabhängiger Freiheitsgrade ist. Die Extrempunkte können daher jeweils separat für die Bestimmung der maximal möglichen Geschwindigkeitskomponente bezüglich des Freiheitsgrades betrachtet werden, für den das lokale Maximum der Ableitung des Betrages der Koordinate nach dem Weg bestimmt wurde.

Kreisbogenförmige (oder kreisförmige) sowie helixförmige Scanning-Wege kommen in der Praxis häufig vor, z. B. bei der Vermessung von Werkstücken, die die Form von Kreisscheiben, Ringen, Kegeln oder Zylindern haben. In der Figurenbeschreibung wird noch auf konkrete Ausführungsbeispiele dazu eingegangen.

Bei der Ermittlung des maximalen Betrages der Scanning-Geschwindigkeit, insbesondere zur Berücksichtigung der Extrempunkte, kann eine Tangente des geschätzten Scanning-Weges berechnet werden, die parallel zu der Linearachse verläuft. Anders ausgedrückt berührt eine gerade Linie (die Tangente) den Scanning-Weg (wenn zumindest lediglich eine lokale Region betrachtet wird) in lediglich einem Punkt, nämlich dem Extrempunkt, der berücksichtigt werden soll. Dabei ist die Tangente, wie erwähnt, parallel zu der Linearachse bzw. der Koordinatenachse der Koordinate, deren Maximum der Ableitung des Betrages der Koordinate nach dem Weg gefunden werden soll. In bestimmten Fällen, wie beispielsweise bei einer Kreisbahn können die Extrempunkte besonders einfach dadurch ermittelt werden, dass der Punkt mit dem größten Abstand und der Punkt mit dem kleinsten Abstand zu der jeweiligen Koordinatenachse ermittelt wird.

Bevorzugt werden die Extrempunkte jedoch (für einen Fall, in dem für den runden Verlauf des Scanning-Weges eine geradlinige Achse definiert wird bzw. ist, die eine Rotationssymmetrieachse des Verlaufs oder eine Rotations-Symmetrieachse einer Projektion des Verlaufs auf eine Ebene senkrecht zu der Symmetrieachse ist) dadurch berücksichtigt, dass das Kreuzprodukt eines Vektors in Richtung der Rotationssymmetrieachse mit einem Vektor in Richtung der Linearachse gebildet wird. Der Vektor in Richtung der Rotationssymmetrieachse wird im Folgenden als Symmetrieachsensektor bezeichnet. Der Vektor in Richtung der Linearachse wird im Folgenden als Linearachsenvektor bezeichnet. Mit dem aus dem Kreuzprodukt des Symmetrieachsenvektors und des Linearachsenvektors erhaltenen Ergebnisvektor werden die Punkte auf dem Scanning-Weg berücksichtigt, auf die der Ergebnisvektor zeigt, wenn er an beliebigen Punkten der Rotationssymmetrie die Achse ansetzt. Unter "ansetzen" wird verstanden, dass der Anfang des Ergebnisvektors an der Rotationssymmetrieachse liegt. Der Ergebnisvektor ist in diesem Fall daher kein am Ursprung des Koordinatensystems ansetzender Ortsvektor, sondern ein Differenzvektor. Darunter, dass der Ergebnisvektor auf den Extrempunkt "zeigt", wird verstanden, dass eine Gerade, auf der der Ergebnisvektor verläuft, wenn er an der Rotationssymmetrieachse ansetzt, den Extrempunkt schneidet.

Für jeden Ansatzpunkt auf der Rotationssymmetrieachse, an dem der Ergebnisvektor ansetzt und für den überhaupt ein Extrempunkt vorhanden ist, kann es je nach Form des Scanning-Weges auch einen zweiten Extrempunkt geben. Dies ist insbesondere bei einem ovalen und bei einem kreisförmigen Scanning-Weg der Fall. Außerdem können (z. B. bei einem helixförmigen Scanning-Weg) mit demselben Ergebnisvektor verschiedene Extrempunkte ermittelt werden, wobei jedoch die Ansatzpunkte an der Rotationssymmetrieachse verschieden sind. Bei der Helix liegen die verschiedenen Ansatzpunkte um die halbe Ganghöhe der Helix versetzt auf der Rotationssymmetrieachse.

Vorzugsweise werden die Extrempunkte für alle Freiheitsgrade berücksichtigt, wobei für jeden der Extrempunkte (zumindest eines Teils des Scanning-Weges, z. B. eines Ganges einer Helix) jeweils ein Tangentenvektor gebildet wird, der in Richtung einer Tangente an dem Extrempunkt verläuft, und wobei jeweils lediglich die Komponente des Tangentenvektors für die Berechnung des maximalen Betrages der Scanning-Geschwindigkeit verwendet wird, die bezüglich des Freiheitsgrades definiert ist, für den der Extrempunkt ermittelt wurde. Diese Komponente wird im Folgenden als "Auswertungskomponente" bezeichnet. Entscheidend für die Auswertung ist dabei die Richtung des Tangentenvektors, d.h. das Verhältnis seiner Komponenten. Dieser Tangentenvektor verläuft in Richtung der Geschwindigkeit des Tastelements beim Scanning (der Scanning-Geschwindigkeit). Da es verschiedene Tangenten an demselben Punkt des Weges geben kann, kann dieser Tangentenvektor auch als Geschwindigkeits-Tangentenvektor bezeichnet werden. Seine Bestimmung hängt von der Geometrie des Scanning-Weges ab. Auf Beispiele der Berechnung des Geschwindigkeits-Tangentenvektors bei konkreten Geometrien wird noch eingegangen.

Die Auswertung der Extrempunkte und die Bestimmung des maximalen Betrages der Scanning-Geschwindigkeit sind mit der Methode der Berechnung des Geschwindigkeit-Tangentenvektors sehr einfach. Ist die Komponente beispielsweise die X-Komponente eines kartesischen Koordinatensystems, dann wird für einen Extrempunkt, für den die Ableitung des Betrages der X-Koordinate nach dem Scanning-Weg maximal ist, lediglich die X-Komponente des Tangentenvektors als Auswertungskomponente verwendet.

Die folgenden bevorzugten Ausgestaltungen betreffen die Bestimmung des maximalen Betrages der Scanning-Geschwindigkeit auf Basis der gebildeten Tangentenvektoren.

Vorzugsweise werden alle Tangentenvektoren auf einen gleichen Betrag normiert und wird aus den Auswertungskomponenten der maximale Betrag der Scanning-Geschwindigkeit ermittelt. Mit der Normierung der Tangentenvektoren wird die Randbedingung der Berechnung berücksichtigt, wonach die Scanning-Geschwindigkeit über den gesamten Scanning-Weg konstant sein soll. Anders ausgedrückt stellt die Normierung den korrekten Bezug zwischen den Auswertungskomponenten her, ohne bereits die Skalierung (d. h. den Betrag) des Tangentenvektors bzw. des Geschwindigkeitsvektors festzulegen.

Vorzugsweise wird aus den Auswertungskomponenten der normierten Tangentenvektoren und aus den maximalen Geschwindigkeitsbeträgen für die jeweils zugeordneten Freiheitsgrade ermittelt, welcher der maximalen Geschwindigkeitsbeträge der Freiheitsgrade den maximalen Betrag der Scanning-Geschwindigkeit limitiert. Dies schließt den Fall mit ein, dass eine Kombination der maximalen Geschwindigkeitsbeträge verschiedener Freiheitsgrade den maximalen Betrag der Scanning-Geschwindigkeit limitiert. In einem einfachen Fall weisen z. B. alle Tangentenvektoren jeweils lediglich eine Komponente ungleich 0 auf, nämlich die jeweilige Auswertungskomponente. Dies ist beispielsweise dann der Fall, wenn der Scanning-Weg eine Kreisbahn ist und in einer Ebene liegt, die von zwei kartesischen Koordinatenachsen aufgespannt wird. In diesem Fall limitiert diejenige Auswertungskomponente den maximalen Betrag der Scanning-Geschwindigkeit, welche bezüglich der Koordinatenachse mit dem niedrigeren maximalen Geschwindigkeitsbetrag definiert ist. Weisen die (normierten) Tangentenvektoren jedoch zwei oder mehr Komponenten ungleich 0 auf, tragen indirekt auch die Komponenten des jeweiligen Tangentenvektors zur Limitierung der maximalen Scanning-Geschwindigkeit bei, die nicht die Auswertungskomponenten sind. Aufgrund der Normierung jedoch drückt sich die durch die anderen Komponenten bewirkte Limitierung in dem Betrag der Auswertungskomponente aus und braucht lediglich für jeden der Tangentenvektoren die Auswertungskomponente betrachtet werden.

Außerdem ist jedoch für die Bestimmung des maximalen Betrages der Scanning-Geschwindigkeit der jeweilige maximale Geschwindigkeitsbetrag für den jeweils zugeordneten Freiheitsgrad der Auswertungskomponente zu berücksichtigen. Ist beispielsweise zwar die Auswertungskomponente für einen bestimmten der Tangentenvektoren relativ groß (dies kann als hoher Ausnutzungsgrad bezeichnet werden) ist aber andererseits der maximale Geschwindigkeitsbetrag des zugeordneten Freiheitsgrades verhältnismäßig gering, dann kann diese Auswertungskomponente allein limitierend für den maximalen Betrag der Scanning-Geschwindigkeit sein. Anders ausgedrückt: In dem Wegpunkt des Tangentenvektors mit dem limitierenden Paar, das aus der Auswertungskomponente und aus dem maximalen Geschwindigkeitsbetrag für den zugeordneten Freiheitsgrad besteht, wird die Scanning-Geschwindigkeit für den gesamten Scanning-Weg limitiert. Das limitierende Paar aus Auswertungskomponente und maximalen Geschwindigkeitsbetrag für den zugeordneten Freiheitsgrad kann beispielsweise dadurch ermittelt werden, dass dieses Paar für jeden der Tangentenvektoren gebildet wird, insbesondere durch Berechnung (Division) des maximalen Geschwindigkeitsbetrages für den Freiheitsgrad geteilt durch die Auswertungskomponente und durch anschließenden Vergleich der Divisionsergebnisse für alle Tangentenvektoren. Das niedrigste Divisionsergebnis gehört zu dem limitierenden Paar. Sind die Tangentenvektoren vorzugsweise auf den Betrag Eins normiert, ist das Divisionsergebnis für das limitierende Paar unmittelbar gleich dem maximalen Betrag der Scanning-Geschwindigkeit.

Ausführungsbeispiele der Erfindung werden nun unter Bezugnahme auf die beigefügte Zeichnung beschrieben. Die einzelnen Figuren der Beschreibung zeigen:

Fig. 1 eine besonders bevorzugte Ausführungsform eines erfindungsgemäßen Koordinatenmessgeräts,

Fig. 2 schematisch einen als Kreisbahn ausgebildeten Scanning-Weg, wobei Extrempunkte gekennzeichnet sind, die für die Berechnung des maximalen Betrages der Scanning-Geschwindigkeit verwendet werden,

Fig. 3 wiederum einen als Kreisbahn ausgebildeten Scanning-Weg, der jedoch in einer durch lediglich zwei Koordinatenachsen aufgespannten Ebene liegt,

Fig. 4 die Kreisbahn gemäß Fig. 2 mit einer schematischen Darstellung von Vektoren, die für die weitere Berechnung der maximalen Scanning-Geschwindigkeit verwendet werden,

Fig. 5 schematisch einen als Helixbahn ausgebildeten Scanning-Weg, wobei Extrempunkte gekennzeichnet sind, die für die Berechnung des maximalen Betrages der Scanning-Geschwindigkeit verwendet werden,

Fig. 6 die Helixbahn gemäß Fig. 5 mit einer schematischen Darstellung von Vektoren, die für die weitere Berechnung der maximalen Scanning-Geschwindigkeit verwendet werden, und

Fig. 7 eine Darstellung, die die Zerlegung eines Scanning-Geschwindigkeitsvektors in zwei Komponenten zeigt.

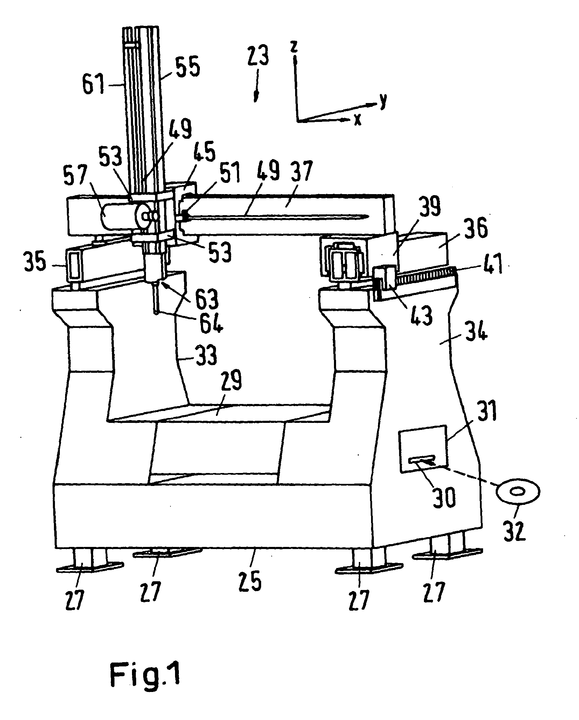

Fig. 1 zeigt eine Ausführungsform eines erfindungsgemäßen Koordinatenmessgeräts am Beispiel eines Koordinatenmessgeräts 23 in Portalbauweise.

Das Koordinatenmessgerät weist eine Basis 25 mit Füßen 27 auf. Die Basis 25 weist in ihrer Mitte eine Werkstückhalterung oder Werkstückauflage 29 auf, auf welcher ein zu vermessendes Werkstück anzuordnen ist. Beidseits der Werkstückhalterung 29 erstrecken sich an der Basis 25 Streben 33, 34 nach oben, welche beidseits der Werkstückhalterung 29 angeordnete, in einer horizontalen Richtung (der Y-Richtung) und parallel zueinander sich erstreckende Längsführungen 35, 36 tragen. Orthogonal zu den Längsführungen 35, 36 erstreckt sich horizontal eine Querführung 37 in X-Richtung, welche an den Längsführungen 35, 36 in Y-Richtung linear verschiebbar gelagert ist. Hierzu ist an einem Ende der Querführung 37 ein Führungsprofil 39 vorgesehen, welches die Längsführung 36 von oben U-förmig umgreift und an dieser beispielsweise mittels Luftkissen geführt ist. Mit ihrem anderen Ende ist die Querführung 37 auf der Oberseite der Längsführung 35 abgestützt und auch gegenüber dieser in Y-Richtung verschiebbar gelagert. Durch einen motorischen Antrieb, welcher von einer Steuerung 31 gesteuert wird, kann die Querführung 37 entlang der Längsführung 36 verschoben werden, wobei eine entsprechende Verschiebestellung in Y-Richtung durch ein Messsystem erfasst wird, welches einen an der Basis festgelegten Maßstab 41 und einen zugehörigen an dem U-Profil 39 festgelegten Sensor 43 zum Ablesen des Maßstabs 41 aufweist.

An der Querführung 37 ist ein Führungsprofil 45 in X-Richtung linear verschiebbar gelagert, wobei die Verschiebestellung in X-Richtung ebenfalls durch ein Messsystem erfasst wird, welches hierzu einen an der Querführung 37 angebrachten Maßstab 49 und einen an dem Führungsprofil 45 festgemachten zugehörigen Sensor 51 aufweist. Von der Steuerung 31 wird ein in Fig. 1 nicht dargestellter Antrieb gesteuert, welcher die Verschiebestellung des Führungsprofils 45 entlang der Querführung 37 ändert.

An dem Führungsprofil 45 sind zwei weitere mit Abstand voneinander angeordnete Führungsprofile 53 vorgesehen, welche eine sich in Z-Richtung erstreckende Stange 55 über einen ebenfalls von der Steuerung 31 gesteuerten Motor 57 verschiebbar lagern. Die Verschiebestellung der Stange 55 in Z-Richtung wird über einen an der Vertikalführung 53 vorgesehenen Sensor 49 erfasst, der die Position an einem an der Stange 55 festgelegten Maßstab 61 abliest. An einer an einem unteren Ende der Stange 55 vorgesehenen Pinole ist ein Messkopfsystem 63 gehaltert. Das Messkopfsystem kann eine Messkopfvedängerung und/oder ein Messkopfwechselsystem umfassen, um den eigentlichen Messkopf an die Pinole zu koppeln. Ein Tastersystem ist wiederum an den Messkopf gekoppelt, wobei das Tastersystem an den Messkopf starr gekoppelt sein kann. Es kann auch ein Tastenivechselsystem vorgesehen sein, um an den Messkopf verschiedene auswechselbare Tastersysteme zu koppeln. Das Tastersystem kann eine Tasterverfängerung umfassen, welche sich in einem Tasterschaft fortsetzt, an dessen Ende ein Tastelement 64 angebracht ist, welches zum Vermessen der Werkstückoberfläche mit dieser in Kontakt gebracht wird. Das Tastelement 64 kann beispielsweise eine Rubinkugel sein. Das Tastersystem kann auch mehrere Taster umfassen, welche sich beispielsweise an einer Tasterverlängerung quer zueinander erstrecken, um in verschiedene Richtungen orientierte Oberflächen des Werkstücks anzutasten. In der Pinole und dem Messkopf oder einem Messkopfwechselsystem oder einer eingefügten Messkopfverlängerung kann auch ein Drehschwenksystem vorgesehen sein, um eine Orientierung des Messkopfes bezüglich der Pinole zu ändern, so dass auch eine Orientierung des Tasters im Raum änderbar ist, um in verschiedene Richtungen orientierte Oberflächen von Werkstücken anzutasten.

Die Steuerung 31 steuert über die Antriebe die Position des Tastelements 64 relativ zu der Werkstückhalterung 29, sie registriert einen Kontakt zwischen dem Tasterelement und der Oberfläche des Werkstücks und sie liest die Messsysteme des Koordinatenmessgeräts 23 aus, um die Koordinaten der Position des Tasterelements 64 relativ zu der Werkstückhalterung 29 möglichst exakt zu messen. Die Steuerung 31 ist in Fig. 1 lediglich schematisch dargestellt. Sie kann als ein Computer ausgeführt sein, welcher Schnittstellen aufweist, um Benutzerbefehle entgegenzunehmen, die Antriebe anzusteuern, die Messsysteme auszulesen und dergleichen. Der Computer führt die vorgesehenen Operationen gemäß einem Programm aus, welches auf verschiedene Weisen in den Computer geladen werden kann. Schematisch in Fig. 1 dargestellt ist eine Compact-Disc ROM 32, welche die Programminformation in computerlesbarer Form trägt und in einen Schacht 30 der Steuerung 31 eingeführt werden kann, um das Programm in den Computer zu laden. Die Programminformation kann allerdings auch in anderer Weise in die Steuerung 31 geladen werden, wie beispielsweise über ein Computernetzwerk.

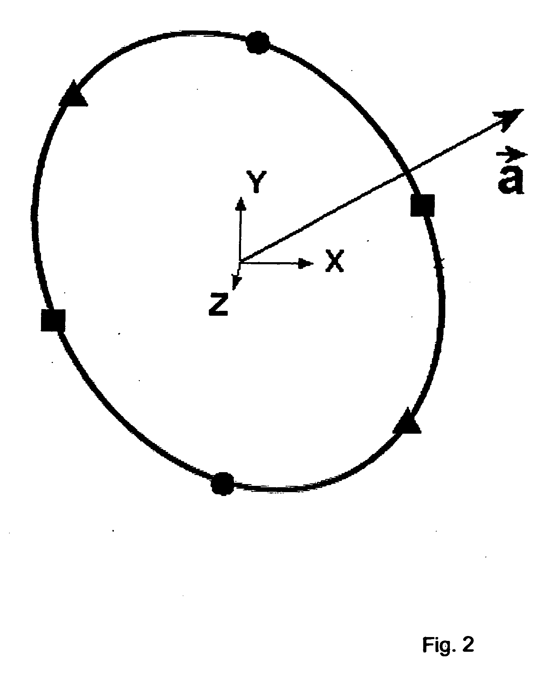

Unter Bezugnahme auf Fig. 2 wird nun für einen einfachen Anwendungsfall, in dem der Scanning-Weg eine Kreisbahn ist, eine Berechnung des Betrages der maximal zulässigen Scanning-Geschwindigkeit (im Folgenden kurz: maximale Scanning-Geschwindigkeit) abgeleitet. Bei der Beschreibung dieses Ausführungsbeispiels wird jedoch auch auf allgemeine Aspekte des erfindungsgemäßen Verfahrens eingegangen.

Wie bereits erwähnt, steht die Berechnung unter der Bedingung, dass der Betrag der Scanning-Geschwindigkeit bei der Ausführung des Werkstück-Scanning, insbesondere im Fall der Kreisbahn, konstant ist. Die Tatsache, dass die maximal mögliche und/oder zulässige Scanning-Geschwindigkeit berechnet werden soll, führt zu der Forderung, dass für jeden Freiheitsgrad der Bewegung des Tastelements das Maximum der zugehörigen Bewegungsgeschwindigkeitskomponente so weit wie möglich ausgenutzt werden soll.

In dem folgenden Ausführungsbeispiel hat das Koordinatenmessgerät drei voneinander unabhängige lineare Freiheitsgrade der Bewegung, wobei die Freiheitsgrade den drei Koordinatenachsen X, Y, Z eines kartesischen Koordinatensystems der Messanordnung entsprechen. Unter anderem werden bei der Berechnung der maximalen Scanning-Geschwindigkeit die in Tabelle 1 eingeführten Symbole verwendet.

Tabelle 1: verwendete Symbole

| Symbol | Beschreibung | Beispiel |
|---|---|---|
| $I$ | Bezugsindex (Kennzeichnet den Bezug eines beliebigen Vektors $\vec{a}$ auf eine Koordinatenachse $I$, wobei $I : X,Y,Z$) | $\vec{aI}$, oder speziell für die X-Achse: $\vec{aX}$ |
| $k$ | Index der Vektorkomponente (Kennzeichnet die Komponente eines beliebigen Vektors $\vec{a}$) | $\vec{a} = \begin{pmatrix} a_x \\ a_y \\ a_z \end{pmatrix} \qquad k : x,y,z$ |

(fortgesetzt)

| Symbol | Beschreibung | Beispiel |
|---|---|---|
| $\vec{vMax}$ | maximale Geschwindigkeit des Koordinatenmessgeräts | $$\vec{vMax} = \begin{pmatrix} vMax_x \\ vMax_y \\ vMax_z \end{pmatrix}$$ |

Auf einem Scanning-Weg kann es Punkte (im Folgenden Extrempunkte genannt, wobei sich "extrem" auf die Geschwindigkeit bezieht) geben, in denen jeweils der maximal mögliche Betrag der Geschwindigkeit der Verfahrachsen wirkt. D.h. Extrempunkte sind Scanning-Punkte, in denen die Bewegungsgeschwindigkeit des Tastelements in einer der drei Koordinatenachsen am größten ist.

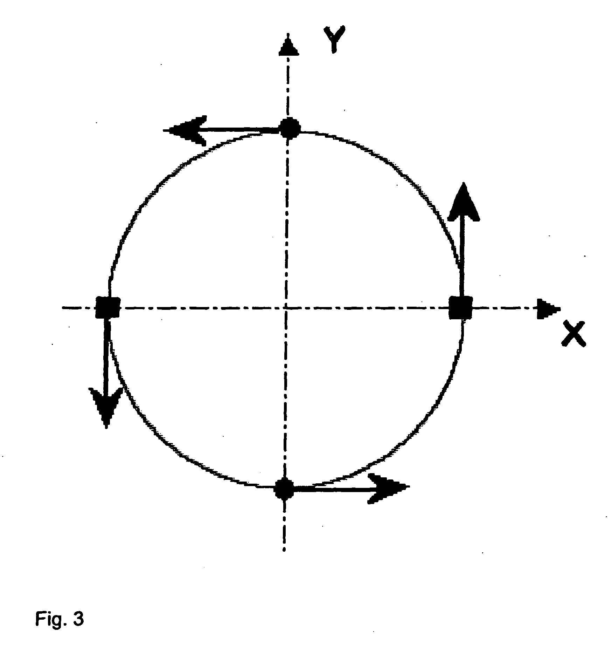

Bei einer Kreisbahn gibt es zumindest vier solche Extrempunkte (wenn die Kreisbahn in der durch zwei der Koordinatenachsen aufgespannten Ebene liegt), siehe Fig. 3. Im Allgemeinen gibt es für eine Kreisbahn jedoch sechs solcher Extrempunkte, siehe Fig. 2.

In dem Beispiel gemäß Fig. 3 liegt die Kreisbahn in der in der XY-Ebene. In der Figur sind die Extrempunkte der Kreisbahn bezüglich der X-Achse oben und unten dargestellt (als kleine Kreise) und sind die Extrempunkte der Kreisbahn bezüglich der Y-Achse rechts und links dargestellt (als kleine Quadrate). Außerdem ist jeweils durch einen Pfeil die Richtung der Bahngeschwindigkeit in dem Extrempunkt beim Scanning dargestellt. Da in diesem Beispiel gemäß Fig. 3 die Kreisbahn in der XY-Ebene liegt, gibt es keine Extrempunkte bezüglich der Z-Richtung.

Liegt die Kreisbahn jedoch nicht in einer Ebene, die von lediglich zwei der Koordinatenachsen aufgespannt wird, existieren auch Extrempunkte bezüglich der dritten Richtung, hier der Z-Richtung. Dieser Fall ist in Fig. 2 dargestellt. In der Figur sind die Extrempunkte der Kreisbahn bezüglich der X-Achse oben und unten dargestellt (als kleine Kreise), sind die Extrempunkte der Kreisbahn bezüglich der Y-Achse rechts oben und links unten dargestellt (als kleine Quadrate) und sind die Extrempunkte der Kreisbahn bezüglich der Z-Achse rechts unten und links oben dargestellt (als kleine Dreiecke). Außerdem sind die Koordinatenachsen X, Y, Z des kartesischen Koordinatensystems dargestellt, die gleich den Verfahrachsen des Koordinatenmessgeräts sind.

Bei einem Kreis verhalten sich die zwei Extrempunkte, die auf dieselbe Koordinatenachse bezogen sind, gleich. D.h. die Richtungen der Scanning-Geschwindigkeiten in den beiden Extrempunkten sind dann einander entgegengesetzt. Die Geschwindigkeitsvektoren sind antiparallel. Somit braucht nur ein Extrempunkt pro Achse betrachtet zu werden, z. B. indem lediglich die Beträge der Geschwindigkeitskomponenten betrachtet werden.

Im Folgenden wird in Bezug auf das Ausführungsbeispiel mit der Kreisbahn eine besonders bevorzugte Ausführungsform des erfindungsgemäßen Verfahrens beschrieben. Der Grundgedanke dieser Ausführungsform liegt in der einfachen Berechnung der Extrempunkte und in der einfachen Bestimmung der maximalen Scanning-Geschwindigkeit durch Vektoroperationen und Auswertung der entscheidenden Vektorkomponenten.

Die Einheitsvektoren (d: h. der Betrag der Vektoren ist gleich eins) $\vec{eX}$ $\vec{eY}$ $\vec{eZ}$ sind definiert als diejenigen Einheitsvektoren, die in Richtung der Koordinatenachsen X, Y, Z verlaufen, oder anders ausgedrückt: das kartesische Koordinatensystem definieren. Für die Kreisbahn und für andere Scanning-Wege mit einer Rotationssymmetrie-Achse kann ein Vektor definiert werden, der in Richtung der Symmetrieachse verläuft und der im Folgenden kurz mit Achsenvektor $\vec{a}$ bezeichnet wird.

Mit diesen drei Einheitsvektoren lassen sich in der im Folgenden beschriebenen Weise einfach die Extrempunkte berechnen.

Die Einheitsvektoren lauten:

$$\vec{eX} = \begin{pmatrix} 1 & 0 & 0 \end{pmatrix}$$

$$\vec{eY} = \begin{pmatrix} 0 & 1 & 0 \end{pmatrix}$$

$$\vec{eZ} = \begin{pmatrix} 0 & 0 & 1 \end{pmatrix}$$

Der Achsenvektor $\vec{a}$ ist vorzugsweise normiert, d.h. $|\vec{a}| = 1$. Über das Kreuzprodukt (in der Literatur auch als Vektorprodukt bezeichnet) zwischen den Einheitsvektoren und dem Achsenvektor $\vec{a}$ werden die Vektoren $\vec{rI}$ berechnet, die in Richtung der Extrempunkte $\vec{pI}$ zeigen, wenn sie als Differenzvektor an der Symmetrieachse ansetzen. Die folgende Gleichung [1] gibt das Kreuzprodukt wieder:

$$\vec{rI} = \vec{eI} \times \vec{a} \qquad [1]$$

Für jede Koordinatenachse gilt somit (in Gleichung [1] wird für $I$ der jeweilige Index X, Y, Z eingesetzt):

$$\vec{rX} = \vec{a} \times \vec{eX}$$

$$\vec{rY} = \vec{a} \times \vec{eY}$$

$$\vec{rZ} = \vec{a} \times \vec{eZ}$$

Somit sind, aus Sicht der Symmetrieachse, die Richtungen bekannt, in denen die Extrempunkte liegen. Losgelöst von dem konkreten Ausführungsbeispiel der Kreisbahn kann es im Allgemeinen vorkommen, dass in der Richtung eines oder mehrerer der Vektoren $\vec{rI}$ mehr als ein Schnittpunkt mit der Scanning-Bahn liegt, insbesondere wenn auch die entgegen gesetzte Richtung berücksichtigt wird.

Wird das Kreuzprodukt zwischen einem Einheitsvektor und dem Achsenvektor $\vec{a}$ gleich Null, dann stellen alle Punkte auf der zu messenden Kreisbahn Extrempunkte dar, die jedoch für die weitere Auswertung nicht berücksichtigt werden müssen. In diesem Fall befindet sich nämlich der gesamte Scanning-Weg in einer Ebene, auf der der Einheitsvektor senkrecht steht. Dies ist zum Beispiel für den in Fig. 3 dargestellten Fall der Einheitsvektor $\vec{eZ}$. Allgemeiner formuliert erhält man:

$$\vec{eI} \times \vec{a} = \vec{0} \qquad (\vec{a} \; parallel \; \vec{eI})$$

d.h. der Achsenvektor $\vec{a}$ verläuft parallel zum Einheitsvektor $\vec{eI}$.

Alternativ zu der Überprüfung, ob das Kreuzprodukt für einen der Einheitsvektoren gleich Null wird, kann das Skalarprodukt zwischen den Einheitsvektoren $\vec{eI}$ und dem Achsenvektor $\vec{a}$ berechnet werden. Ist der Betrag des Skalarproduktes gleich 1, so ist auch dies ein Indiz, dass sich der Scanning-Weg, hier z. B. die Kreisbahn, in einer der Koordinatensystem-Ebenen (Ebene XY, Ebene XZ, oder Ebene YZ) befindet.

$$\left| \vec{eI} \cdot \vec{a} \right| = 1 \qquad (\vec{a} \; parallel \; \vec{eI})$$

Im Fall der Kreisbahn können dann für die Berechnung der beiden auf die anderen Koordinatenachsen bezogenen Richtungssektoren $\vec{rI}$, die aus Sicht der Symmetrieachse auf die Extrempunkte zeigen, die beiden Einheitsvektoren $\vec{eI}$ verwendet werden, die senkrecht zum Achsenvektor $\vec{a}$ stehen, z. B:

$$\vec{eX} \times \vec{a} = \vec{0} \qquad \Rightarrow \quad \vec{rX} = \vec{eY} \; oder \; \vec{rX} = \vec{eZ}$$

Die Extrempunkte $\vec{pI}$ können im Fall der Kreisbahn dadurch berechnet werden, dass der Vektor $\vec{rI}$ mit dem Radius $D/2$ des Kreises multipliziert wird. Für die Berechnung der maximalen Scanning-Geschwindigkeit der Kreisbahn wird diese Multiplikation jedoch nicht benötigt:

$$\vec{pI} = \vec{rI} \cdot D/2 \quad [2]$$

Das Kreuzprodukt zwischen dem Achsenvektor $\vec{a}$ und den in der Gleichung [1] berechneten Vektoren $\vec{rI}$ ergibt u. a. die Richtung der Scanninggeschwindigkeit in dem jeweiligen Extrempunkt.

$$\vec{tI} = \vec{a} \times \vec{rI} \quad [3]$$

Für jede Achse gilt somit:

$$\vec{tX} = \vec{a} \times \vec{rX}$$

$$\vec{tY} = \vec{a} \times \vec{rY}$$

$$\vec{tZ} = \vec{a} \times \vec{rZ}$$

Diese Vektoren $\vec{tI}$ sind im Fall der Kreisbahn Tangentenvektoren an den Scanning-Weg und somit Geschwindigkeitsvektoren, wobei jedoch die Skalierung der Geschwindigkeit noch nicht durchgeführt wurde. In anderen Fällen, z. B. dem unten beschriebenen Fall eines Scanning-Weges in Form einer Helix, kann es andere Wege zur Bestimmung der Tangentenvektoren an die Extrempunkte geben. Die Auswertung der Tangentenvektoren kann jedoch in allen Fällen wie folgt durchgeführt werden.

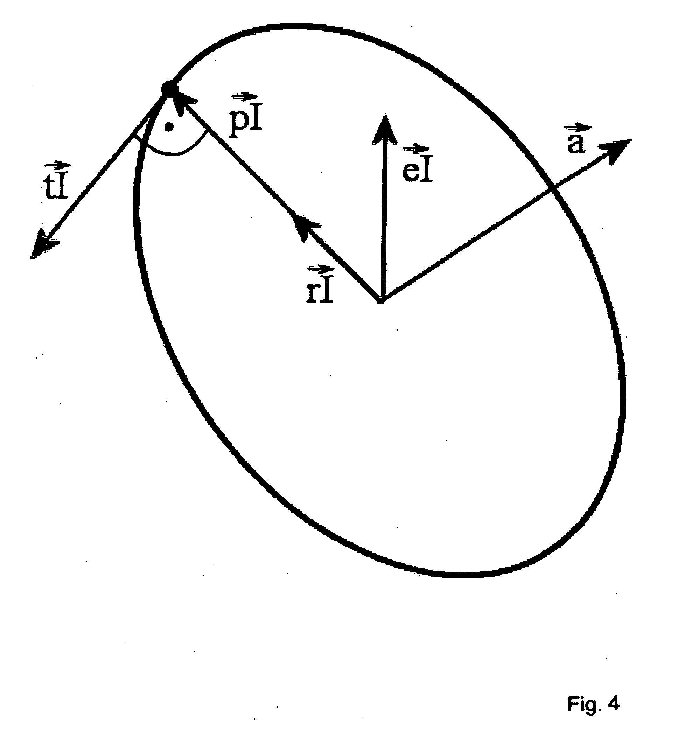

Fig. 4 zeigt eine Darstellung für den Fall der Kreisbahn, wobei der auf der Ebene der Kreisbahn senkrecht stehende Achsenvektor $\vec{a}$, der Einheitsvektor $\vec{eI}$ für die Berechnung eines Extrempunktes, der durch die Bildung des Kreuzprodukts zwischen dem Achsenvektor ä und dem Einheitsvektor $\vec{eI}$ erhaltene Richtungsvektor $\vec{rI}$, der mit diesem Richtungsvektor $\vec{rI}$ kollineare Vektor $\vec{pI}$, der tatsächlich von der Symmetrieachse zu dem berechneten Extrempunkt zeigt, und der Tangentenvektor $\vec{tI}$ erkennbar sind. Der rechte Winkel zwischen dem Vektor $\vec{pI}$ und dem Tangentenvektor $\vec{tI}$ ist ebenfalls dargestellt.

Im Folgenden wird nun aus den ermittelten Tangentenvektoren $\vec{tI}$ die maximale Scanning-Geschwindigkeit ermittelt.

Hierzu werden die Komponenten $\vec{tI}_k$ des Vektors $\vec{tI}$ einzeln betrachtet:

$$\vec{tI}_k : \quad \vec{tX} = \begin{pmatrix} tX_x \\ tX_y \\ tX_z \end{pmatrix} \quad ; \quad \vec{tY} = \begin{pmatrix} tY_x \\ tY_y \\ tY_z \end{pmatrix} \quad ; \quad \vec{tZ} = \begin{pmatrix} tZ_x \\ tZ_y \\ tZ_z \end{pmatrix}$$

Die Komponenten $\vec{tI}_k$ des Tangentenvektors $\vec{tI}$ liefern für die jeweilige Achse $I$, eine wesentliche Information über die maximale Scanning-Geschwindigkeit, wenn alle Tangentenvektoren auf den gleichen Betrag normiert sind. Im obigen Ausführungsbeispiel ist dies der Fall, da sowohl der Achsenvektor $\vec{a}$ als auch der Vektor $\vec{rI}$ Vektoren mit Betrag Eins sind und daher auch deren Kreuzprodukt den Betrag eins hat.

Die Komponenten $\vec{t}l_k$ des Tangentenvektors $\vec{t}l$ liefern den so genannten Ausnutzungsgrad $\eta l_k$ der Achsgeschwindigkeiten $vMax_k$, d.h. der maximalen Geschwindigkeitsbeträge des jeweils zugeordneten Freiheitsgrades. Unter dem Ausnutzungsgrad $\eta l_k$ kann man den Grad verstehen, um den die Komponente $\vec{t}l_k$ an den Betrag des Vektors (hier Eins) herankommt. Sind die anderen beiden Geschwindigkeitskomponenten in dem Extrempunkt Null (wie in dem Ausführungsbeispiel gemäß Fig. 3), dann ist der Ausnutzungsgrad gleich Eins. Sind dagegen nicht beide anderen Geschwindigkeitskomponenten in dem Extrempunkt Null (wie in dem Ausführungsbeispiel gemäß Fig. 2), dann ist der Ausnutzungsgrad geringer. Folglich könnte (wenn nur dieser eine Extrempunkt betrachtet würde) die Scanning-Geschwindigkeit in dem Extrempunkt insgesamt höher sein, da außer der Geschwindigkeitskomponente $\vec{t}l_k$ auch die beiden anderen Geschwindigkeitskomponenten zu der Scanning-Geschwindigkeit beitragen.

Nur der Betrag der Geschwindigkeitskomponente $\vec{t}l_k$ geht in die Berechnung ein, da die Geschwindigkeit in den Achsen auch negative Werte annehmen kann (die Richtung der Bewegung entlang der Koordinatenachse kann umgekehrt werden).

Da $tl$ den Geschwindigkeitsvektor für einen Extrempunkt bezüglich der Achse $l$ darstellt, wird für die Bestimmung des Ausnutzungsrades $\eta l_k$ nur die Komponente benötigt, für die folgende Bedingung gilt:

$$\eta I_k = \left| tI_k \right| \qquad f\ddot{u}r \ I = k \qquad [4]$$

Für die Ermittlung der maximalen Scanning-Geschwindigkeit ist ferner nur die (betragsmäßig) größte Komponente $\vec{t}l_k$ aller Tangentenvektoren $tl$ erforderlich, die als Tangentenvektoren an Extrempunkte bezüglich derselben Achse gewonnen wurden. Anders ausgedrückt: Unter den Tangentenvektoren derselben Achse ist nur der größte Ausnutzungsgrad entscheidend, da die Geschwindigkeit in allen Punkten mit geringerem Ausnutzungsgrad weniger stark durch die Komponente $\vec{t}l_k$ limitiert wird.

Für jede Achse gilt somit nur ein maximaler Ausnutzungsgrad:

$$\eta X_x = \left| tX_x \right|$$

$$\eta Y_y = \left| tY_y \right|$$

$$\eta Z_z = \left| tZ_z \right|$$

Da der Vektor $\vec{t}Y$ die Richtung von VScan-Bahn auf dem Extrempunkt der Y-Achse ist, beschreibt die Komponente $tY_y$ den Maximalwert für die Y-Achse auf der gesamten Kreis-Scanningbahn.

Die maximale Scanning-Geschwindigkeit $vScanMax_k$ in der Achse wird in dem bevorzugten Ausführungsbeispielen dadurch berechnet, dass für jede Achse der Kehrwert des maximalen Ausnutzungsgrades $\eta l_k$ mit der maximal zulässigen Achsgeschwindigkeit $vMax_k$ des Koordinatenmessgeräts bzw. des Tastelements multipliziert wird. Durch die Multiplikation der Achsgeschwindigkeit werden eventuell unterschiedliche Geschwindigkeiten in den Achsen berücksichtigt.

$$vScanMax_k = \frac{1}{\eta I_k} vMax_k \qquad f\ddot{u}r \ I = k \qquad [5]$$

Aus den drei berechneten Werten $vScanMax_k$ wird nun das Minimum bestimmt. Dies ist erforderlich, da die Geschwindigkeit in dem Extrempunkt mit dem niedrigsten Geschwindigkeitsbetrag die Scanning-Geschwindigkeit $vScanBahn$ des Scanning-Weges begrenzt.

$$vScanBahn = \min\left(vScanMax_x \; ; \; vScanMax_y \; ; \; vScanMax_z\right) \qquad [6]$$

Zuvor wurde verschiedentlich auf den Anwendungsfall einer Kreisbahn eingegangen. Im Folgenden wird auf einen weiteren in der Praxis häufig vorkommenden Fall eingegangen, dem Scanning-Weg in Form einer Helix. Dieser Fall kommt insbesondere dann vor, wenn eine zylinderförmige Oberfläche abgetastet wird. Es wird im Folgenden lediglich auf Unterschiede und Besonderheiten zu der zuvor beschriebenen Ausführungsform eingegangen.

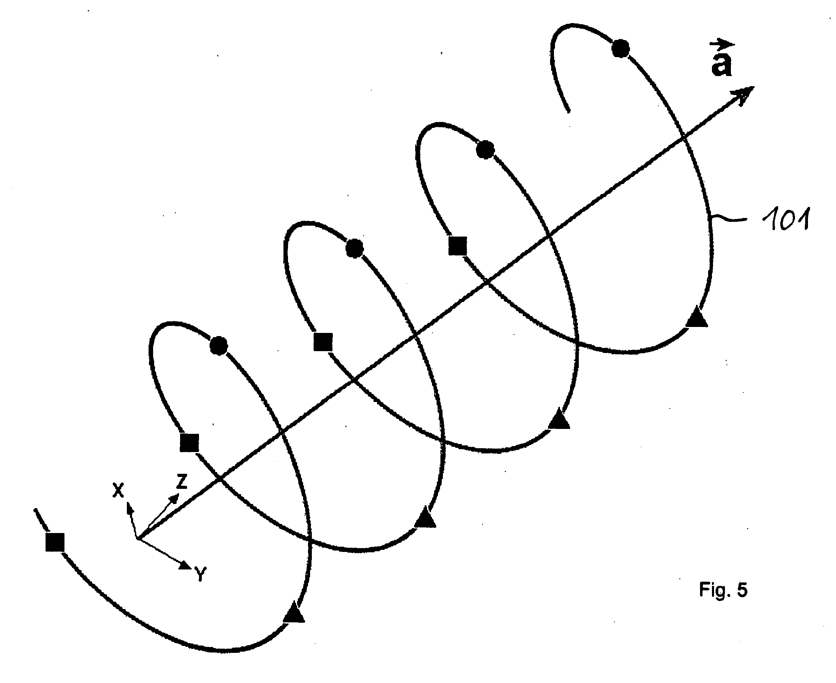

Fig. 5 zeigt eine helixförmige Scanning-Bahn 101. Erkennbar sind in der Figur die Zylinderachse (Symmetrieachse), auf der der Achsenvektor $\vec{a}$ liegt, das kartesische Koordinatensystem X, Y, Z und die Extrempunkte bezüglich der drei Achsen. Extrempunkte bezüglich der X-Achse sind mit kleinen Kreisen dargestellt, Extrempunkte bezüglich der Y-Achse sind mit kleinen Quadraten dargestellt und Extrempunkte bezüglich der Z-Achse sind mit kleinen Dreiecken dargestellt. Bezüglich jeder der drei Achsen sind vier Extrempunkte dargestellt, je einer in jeder Windung (Gang) der Helix. D.h. es sind insgesamt drei Extrempunkte pro Windung vorhanden und dargestellt.

Die Extrempunkte werden bevorzugt in derselben Weise, durch Bildung des Kreuzprodukts des Achsenvektors $\vec{a}$ mit dem jeweiligen Einheitsvektor der Koordinatenachse gebildet, bzw. der aus dem Kreuzprodukt erhaltene

Ergebnisvektor $\vec{rl}$ wird für die Bestimmung der maximalen Scanning-Geschwindigkeit genutzt. Dabei muss wie auch in dem oben beschriebenen Ausführungsbeispiel der Ort des Extrempunktes nicht explizit bestimmt werden.

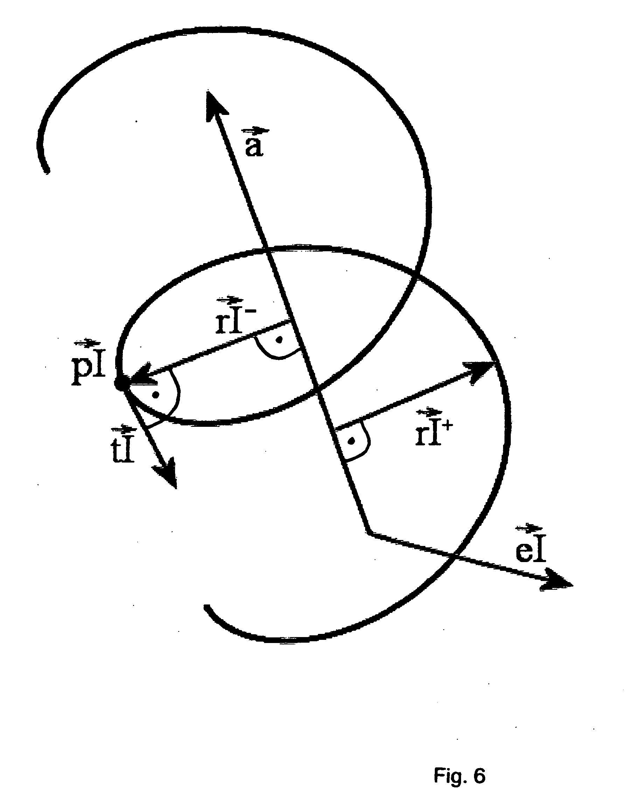

Zusätzlich zu den drei in Fig. 5 pro Helixwindung dargestellten Extrempunkten werden jedoch auch drei weitere Extrempunkte pro Helixwindung berücksichtigt, nämlich je ein weiterer Extrempunkt für jede Koordinatenachse. Andererseits reicht es aus, die Extrempunkte einer einzigen Helixwindung zu berücksichtigen, da sich die Verhältnisse in jeder Windung wiederholen. Fig. 6 zeigt die entsprechenden

Ergebnisvektoren $\vec{rl}$ für eine der Koordinatenachsen, wobei die beiden Ergebnisvektoren sich durch ihre Richtung unterscheiden, d.h. durch ihr Vorzeichen. Daher ist einer der beiden Ergebnisvektoren mit einem Pluszeichen gekennzeichnet und der andere mit einem Minuszeichen. Die (nicht erforderliche) Bestimmung der Lage ist für einen der Extrempunkte (links in der Figur, dort wo der Tangentenvektor $\vec{tl}$ ansetzt) auch aus Fig. 6 erkennbar. Der mit dem Ergebnisvektor bzw. dem Richtungsvektor $\vec{rl}$ kollineare Vektor $\vec{pl}$, der tatsächlich von der Symmetrieachse (auf der der Achsenvektor verläuft) zu dem berechneten Extrempunkt zeigt, ist ebenfalls in Fig. 6 dargestellt. Die beiden Ergebnisvektoren mit unterschiedlichen Vorzeichen setzen an verschiedenen Stellen des Achsenvektors ä an, die um eine halbe Ganghöhe voneinander entfernt sind. Die beiden Ergebnisvektoren schließen jeweils einen rechten Winkel mit dem Achsenvektor $\vec{a}$ ein, wie durch einen Winkelbogen mit einem Punkt darin dargestellt ist. Für die Ergebnisvektoren aller Achsen gilt:

$$\vec{rX^+} = \vec{a} \times \left(+\vec{eX}\right) \qquad\qquad \vec{rX^-} = \vec{a} \times \left(-\vec{eX}\right)$$

$$\vec{rY^+} = \vec{a} \times \left(+\vec{eY}\right) \qquad\qquad \vec{rY^-} = \vec{a} \times \left(-\vec{eY}\right)$$

$$\vec{rZ^+} = \vec{a} \times \left(+\vec{eZ}\right) \qquad\qquad \vec{rZ^-} = \vec{a} \times \left(-\vec{eZ}\right)$$

Wird das Kreuzprodukt zwischen den Einheitsvektoren $\vec{el}$ und dem Achsenvektor $\vec{a}$ gleich Null, dann stellen alle Punkte auf der zu messenden Zylinderbahn Extrempunkte dar. In diesem Fall ist die Zylinderachse parallel zu der jeweiligen Verfahrachse.

$$\vec{el} \times \vec{a} = \vec{0} \qquad (\vec{a} \;\; parallel \;\; \vec{el})$$

Dies kann wiederum alternativ durch Bildung des Skalarproduktes festgestellt werden (siehe oben).

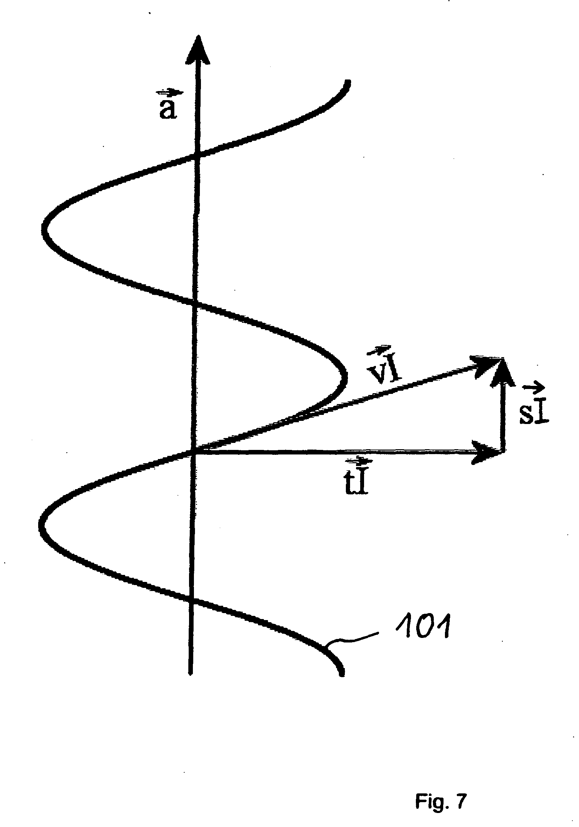

Bei der Zylinderbahn lässt sich die Scanning-Geschwindigkeit $\vec{vl}$ in einen tangentialen Anteil $\vec{tl}$ (der in einer Ebene senkrecht zur Zylinderachse liegt) und in einen achsparallelen Anteil $\vec{sl}$(Vorschub der Helix) aufteilen. In Fig. 7 wird dies veranschaulicht. Die Figur zeigt außer der Vektorzerlegung auch den Achsenvektor $\vec{a}$ und den helixförmigen Scanning-Weg 101 entlang der Zylinderfläche.

Der achsparallele Anteil $\vec{sl}$ ist für alle sechs Extrempunkte gleich. Es wird daher keine Indizierung mit *l* benötigt. Für die Bestimmung der maximalen Scanning-Geschwindigkeit werden die Beträge der Vektoren wiederum normiert. Die Berechnung der beiden Anteile der Scanning-Geschwindigkeit wird im Folgenden beschrieben.

Das Kreuzprodukt zwischen dem Achsenvektor $\vec{a}$ und gemäß Gleichung [1] berechneten Vektor $\vec{rl}$, ergibt den tangentialen Anteil $\vec{tl}$ der Scanning-Geschwindigkeit $\vec{vl}$.

$$\vec{tl} = \vec{a} \times \vec{rl} \qquad [3]$$

Dieser Schritt des Verfahrens ist daher gleich wie im Fall der Kreisbahn. Es gilt somit:

$$\vec{tX^+} = \vec{a} \times \vec{rX^+} \qquad \vec{tX^-} = \vec{a} \times \vec{rX^-}$$

$$\vec{tY^+} = \vec{a} \times \vec{rY^+} \qquad \vec{tY^-} = \vec{a} \times \vec{rY^-}$$

$$\vec{tZ^+} = \vec{a} \times \vec{rZ^+} \qquad \vec{tZ^-} = \vec{a} \times \vec{rZ^-}$$

In Fig. 6 ist außer den bereits erwähnten Vektoren auch der tangentiale Anteil $\vec{tl}$ der Scanning-Geschwindigkeit ohne den achsparallelen Anteil für einen der Extrempunkte dargestellt. Für weitere Berechnungen werden die Vektoren $\vec{tl}$ normiert, sodass

$$\left| \vec{tl} \right| = 1 \,.$$

Alle achsparallelen Anteile $\vec{sl}$ der Scanning-Geschwindigkeit $\vec{vl}$ haben den gleichen Betrag und die gleiche Richtung und sind identisch mit dem Achsenvektor $\vec{a}$. Aus diesem Grund gilt:

$$\vec{sl} = \vec{s} = \vec{a} \qquad [4]$$

Für weitere Berechnungen wird der Vektor $\vec{s}$ des (nicht indizierten) achsparallelen Anteils der Scanning-Geschwindigkeit normiert, sodass gilt:

$$\left| \vec{s} \right| = 1 \,.$$

Die Richtung der Scanninggeschwindigkeit $\vec{vl}$ wird bestimmt durch die beiden Vektoren $\vec{tl}$ und $\vec{s}$, die Anzahl der Umdrehungen *n*, den Durchmesser *D* und die Höhe *h* des Zylinders.

Um die Steigung der Helix zu berücksichtigen, muss der tangentiale Anteil $\vec{tl}$ mit dem Umfang $U = D \cdot \pi$ und der Anzahl der Umdrehungen *n* multipliziert werden. Des weiteren muss der achsparallele Anteil $\vec{s}$ mit der Höhe *h* des Zylinders multipliziert werden.

Die Vektor der Scanning-Geschwindigkeit $\vec{vl}$ wird durch die vektorielle Addition berechnet. Es gilt:

$$\vec{vI} = \vec{tI} \cdot D \cdot \pi \cdot n + \vec{s} \cdot h \qquad [5]$$

Für weitere Berechnungen wird der Vektor $\vec{vI}$ der Scanning-Geschwindigkeit normiert, sodass gilt:

$$\left| \vec{vI} \right| = 1 \,.$$

Es soll bei dieser Gelegenheit auf die Analogie zu der Berechnung im Fall der Kreisbahn hingewiesen werden: Wird die Ganghöhe $h = 0$ , ergibt sich unmittelbar:

$$\vec{vI} = \vec{tI} \,.$$

Umgekehrt folgt, dass die weitere, oben bereits beschriebene Verfahrensweise zur Berechnung der maximalen Scanning-Geschwindigkeit in der gleichen Weise für die Helix angewendet werden kann, wobei jedoch an Stelle des Tangentenvektors $\vec{tI}$ bei der Kreisbahn hier der Scanning-Geschwindigkeitsvektor $\vec{vI}$ verwendet wird. die Beschreibung wird daher an dieser Stelle nicht mehr wiederholt. Weiterhin zu berücksichtigen ist nur noch, dass bezüglich jeder der drei Koordinatenachsen zwei Extrempunkte vorhanden sind.

Im Folgenden wird wiederum für einen Scanning-Weg in Form einer Helix ein Zahlenbeispiel für die Berechnung der maximalen Scanning-Geschwindigkeit beschrieben. Die verwendeten Symbole sind dieselben wie oben eingeführt. Das Zahlenbeispiel geht von folgender Geometrie und Lage der Helix im kartesischen Koordinatensystem aus. Der Achsenvektor hat folgende Koordinaten:

$$\vec{a} = \begin{pmatrix} 0,2425 \\ 0 \\ 0,9701 \end{pmatrix} .$$

Der Durchmesser $D$ eines Zylinders, dessen Oberfläche die Helix umläuft, beträgt 20 mm, die Höhe $h$ des Zylinders 100 mm und die Gangzahl der Helix über diese Höhe ist 2.

Die maximalen Beträge der Geschwindigkeiten der drei Linearachsen in X-, Y- und Z-Richtung sind jeweils 300 mm/s.

Für die Ergebnisvektoren $\vec{rI}$ des Kreuzprodukt aus Gleichung [1], die auf die Extrempunkte zeigen, ergibt sich:

$$\vec{rX^+} = \vec{a} \times \vec{eX} = \begin{pmatrix} 0,2425 \\ 0 \\ 0,9701 \end{pmatrix} \times \begin{pmatrix} 1 \\ 0 \\ 0 \end{pmatrix} = \begin{pmatrix} 0 \\ 0,9701 \\ 0 \end{pmatrix}$$

$$\vec{rX^-} = \vec{a} \times -\vec{eX} = \begin{pmatrix} 0,2425 \\ 0 \\ 0,9701 \end{pmatrix} \times \begin{pmatrix} -1 \\ 0 \\ 0 \end{pmatrix} = \begin{pmatrix} 0 \\ -0,9701 \\ 0 \end{pmatrix}$$

$$\vec{rY^+} = \vec{a} \times \vec{eY} = \begin{pmatrix} 0,2425 \\ 0 \\ 0,9701 \end{pmatrix} \times \begin{pmatrix} 0 \\ 1 \\ 0 \end{pmatrix} = \begin{pmatrix} -0,9701 \\ 0 \\ 0,2425 \end{pmatrix}$$

$$\vec{rY^-} = \vec{a} \times -\vec{eY} = \begin{pmatrix} 0,2425 \\ 0 \\ 0,9701 \end{pmatrix} \times \begin{pmatrix} 0 \\ -1 \\ 0 \end{pmatrix} = \begin{pmatrix} 0,9701 \\ 0 \\ -0,2425 \end{pmatrix}$$

$$\vec{rZ^+} = \vec{a} \times \vec{eZ} = \begin{pmatrix} 0,2425 \\ 0 \\ 0,9701 \end{pmatrix} \times \begin{pmatrix} 0 \\ 0 \\ 1 \end{pmatrix} = \begin{pmatrix} 0 \\ -0,2425 \\ 0 \end{pmatrix}$$

$$\vec{rZ^-} = \vec{a} \times -\vec{eZ} = \begin{pmatrix} 0,2425 \\ 0 \\ 0,9701 \end{pmatrix} \times \begin{pmatrix} 0 \\ 0 \\ -1 \end{pmatrix} = \begin{pmatrix} 0 \\ 0,2425 \\ 0 \end{pmatrix}$$

Dafür lauten die Ergebnisse der bereits auf Eins normierten tangentialen Anteile $\vec{tl}$ der Scanning-Geschwindigkeit $\vec{vl}$ :

$$\vec{tX^+} = \vec{a} \times \vec{rX^+} = \begin{pmatrix} 0,2425 \\ 0 \\ 0,9701 \end{pmatrix} \times \begin{pmatrix} 0 \\ 0,9701 \\ 0 \end{pmatrix} = \begin{pmatrix} -0,9701 \\ 0 \\ 0,2425 \end{pmatrix}$$

$$\vec{tX^-} = \vec{a} \times \vec{rX^-} = \begin{pmatrix} 0,2425 \\ 0 \\ 0,9701 \end{pmatrix} \times \begin{pmatrix} 0 \\ -0,9701 \\ 0 \end{pmatrix} = \begin{pmatrix} 0,9701 \\ 0 \\ -0,2425 \end{pmatrix}$$

$$\vec{tY^+} = \vec{a} \times \vec{rY^+} = \begin{pmatrix} 0,2425 \\ 0 \\ 0,9701 \end{pmatrix} \times \begin{pmatrix} -0,9701 \\ 0 \\ 0,2425 \end{pmatrix} = \begin{pmatrix} 0 \\ -1 \\ 0 \end{pmatrix}$$

$$\vec{tY^-} = \vec{a} \times \vec{rY^-} = \begin{pmatrix} 0,2425 \\ 0 \\ 0,9701 \end{pmatrix} \times \begin{pmatrix} 0,9701 \\ 0 \\ -0,2425 \end{pmatrix} = \begin{pmatrix} 0 \\ 1 \\ 0 \end{pmatrix}$$

$$\vec{tZ^+} = \tilde{a} \times \vec{rZ^+} = \begin{pmatrix} 0,2425 \\ 0 \\ 0,9701 \end{pmatrix} \times \begin{pmatrix} 0 \\ -0,2425 \\ 0 \end{pmatrix} = \begin{pmatrix} 0,9701 \\ 0 \\ -0,2425 \end{pmatrix}$$

$$\vec{tZ^-} = \tilde{a} \times \vec{rZ^-} = \begin{pmatrix} 0,2425 \\ 0 \\ 0,9701 \end{pmatrix} \times \begin{pmatrix} 0 \\ 0,2425 \\ 0 \end{pmatrix} = \begin{pmatrix} -0,9701 \\ 0 \\ 0,2425 \end{pmatrix}$$

Da keines der Kreuzprodukte gleich $\vec{0}$ (d.h. dem Nullvektor) ist, muss kein Sonderfall betrachtet werden, in dem die Symmetrieachse parallel zu einem der Einheitsvektoren der Koordinatenachsen ist.

Der achsparallele Anteil der Scanning-Geschwindigkeit berechnet sich zu:

$$\vec{sI} = \vec{s} = \vec{a} = \begin{pmatrix} 0,2425 \\ 0 \\ 0,9701 \end{pmatrix}$$

Daraus erhält man die folgenden Geschwindigkeitsvektoren in den Extrempunkten, wobei auch diese Geschwindigkeitsvektoren bereits auf Eins normiert sind:

$$\vec{vX^+} = \vec{tX^+} \cdot D \cdot \pi \cdot n + \vec{s} \cdot h = \begin{pmatrix} -0,9701 \\ 0 \\ 0,2425 \end{pmatrix} \cdot 20mm \cdot \pi \cdot 2 + \begin{pmatrix} 0,2425 \\ 0 \\ 0,9701 \end{pmatrix} \cdot 100mm = \begin{pmatrix} -0,6081 \\ 0 \\ 0,7939 \end{pmatrix}$$

$$\vec{vX^-} = \vec{tX^-} \cdot D \cdot \pi \cdot n + \vec{s} \cdot h = \begin{pmatrix} 0,9701 \\ 0 \\ -0,2425 \end{pmatrix} \cdot 20mm \cdot \pi \cdot 2 + \begin{pmatrix} 0,2425 \\ 0 \\ 0,9701 \end{pmatrix} \cdot 100mm = \begin{pmatrix} 0,9101 \\ 0 \\ 0,4143 \end{pmatrix}$$

$$\vec{vY^+} = \vec{tY^+} \cdot D \cdot \pi \cdot n + \vec{s} \cdot h = \begin{pmatrix} 0 \\ -1 \\ 0 \end{pmatrix} \cdot 20mm \cdot \pi \cdot 2 + \begin{pmatrix} 0,2425 \\ 0 \\ 0,9701 \end{pmatrix} \cdot 100mm = \begin{pmatrix} 0,1510 \\ -0,7825 \\ 0,6041 \end{pmatrix}$$

$$\vec{vY^-} = \vec{tY^-} \cdot D \cdot \pi \cdot n + \vec{s} \cdot h = \begin{pmatrix} 0 \\ 1 \\ 0 \end{pmatrix} \cdot 20mm \cdot \pi \cdot 2 + \begin{pmatrix} 0,2425 \\ 0 \\ 0,9701 \end{pmatrix} \cdot 100mm = \begin{pmatrix} 0,1510 \\ 0,7825 \\ 0,6041 \end{pmatrix}$$

$$\vec{vZ}^{+} = \vec{tZ}^{+} \cdot D \cdot \pi \cdot n \;+\; \vec{s} \cdot h = \begin{pmatrix} 0,9701 \\ 0 \\ -0,2425 \end{pmatrix} \cdot 20mm \cdot \pi \cdot 2 \;+\; \begin{pmatrix} 0,2425 \\ 0 \\ 0,9701 \end{pmatrix} \cdot 100mm = \begin{pmatrix} 0,9101 \\ 0 \\ 0,4143 \end{pmatrix}$$

$$\vec{vZ}^{-} = \vec{tZ}^{-} \cdot D \cdot \pi \cdot n \;+\; \vec{s} \cdot h = \begin{pmatrix} -0,9701 \\ 0 \\ 0,2425 \end{pmatrix} \cdot 20mm \cdot \pi \cdot 2 \;+\; \begin{pmatrix} 0,2425 \\ 0 \\ 0,9701 \end{pmatrix} \cdot 100mm = \begin{pmatrix} -0,6081 \\ 0 \\ 0,7939 \end{pmatrix}$$

Daraus ergeben sich die relevanten Ausnutzungsgrade:

$$\eta X = \max\left( \left| \vec{vX}_x^{+} \right|;\; \left| \vec{vX}_x^{-} \right| \right) = \max\left( \left| -0,6081 \right|;\; \left| 0,9101 \right| \right) = 0,9101$$

$$\eta Y = \max\left( \left| \vec{vY}_y^{+} \right|;\; \left| \vec{vY}_y^{-} \right| \right) = \max\left( \left| -0,7825 \right|;\; \left| 0,7825 \right| \right) = 0,7825$$

$$\eta Z = \max\left( \left| \vec{vZ}_z^{+} \right|;\; \left| \vec{vZ}_z^{-} \right| \right) = \max\left( \left| 0,4143 \right|;\; \left| 0,7939 \right| \right) = 0,7939$$

wobei bereits für jede der Koordinatenachsen X, Y, Z das Maximum der Auswertungskomponenten gebildet und der Betrag berechnet wurden.

Die maximalen Scanning-Geschwindigkeiten für die einzelnen Koordinatenachsen werden nun berechnet:

$$vScanMax_x = \frac{1}{\eta X_x} vMax_x = \frac{1}{0,9101} 300mm/s = 329,6mm/s$$

$$vScanMax_y = \frac{1}{\eta X_y} vMax_y = \frac{1}{0,7825} 300mm/s = 383,4mm/s$$

$$vScanMax_z = \frac{1}{\eta X_z} vMax_z = \frac{1}{0,7939} 300mm/s = 377,9mm/s$$

und deren Minimum gebildet:

$$vScanBahn = \min\left( 329,6mm/s;\quad 383,4mm/s;\quad 377,9mm/s \right) = 329,6mm/s$$

Das Gesamtergebnis des maximalen Betrages der Scanning-Geschwindigkeit lautet somit: 329,6 mm/s. Sie wird durch die Geschwindigkeit in einem der beiden bezüglich der X-Achse bestimmten Extrempunkte limitiert.

**Patentansprüche**

1. Verfahren zum Antasten einer Werkstück-Oberfläche mit einem Koordinatenmessgerät (23),

   - wobei ein Tastelement (64) des Koordinatenmessgeräts (23) mit der Oberfläche in Kontakt gebracht wird und das Tastelement (64) unter Beibehaltung des Kontakts entlang der Oberfläche in einer Scanning-Bewegung bewegt wird,
   - wobei das Koordinatenmessgerät (23) eine Mehrzahl von voneinander unabhängigen Freiheitsgraden, z. B. Freiheitsgrade von Linearachsen, der möglichen Bewegungen des Tastelements bezüglich dem Werkstück aufweist und wobei für die Freiheitsgrade maximale Geschwindigkeitsbeträge definiert sind, die das Maximum einer Bewegungsgeschwindigkeitskomponente des Tastelements (64) bezogen auf den jeweiligen Freiheitsgrad beschreiben,
   - wobei für ein geplantes Scanning des Werkstücks ein geschätzter Scanning-Weg vorgegeben wird oder ist, auf dem sich das Tastelement (64) beim Scanning bewegen soll, und wobei der tatsächliche Scanning-Weg abhängig von den tatsächlichen Abmessungen des Werkstücks von dem geschätzten Scanning-Weg abweichen kann, **dadurch gekennzeichnet, dass** unter Berücksichtigung der maximalen Geschwindigkeitsbeträge für die verschiedenen Freiheitsgrade ein maximaler Betrag der Scanning-Geschwindigkeit ermittelt wird, mit dem der geschätzte Scanning-Weg bei konstantem Betrag der Geschwindigkeit des Tastelements (64) durchfahren werden kann.

2. Verfahren nach Anspruch 1, wobei zumindest einer der Freiheitsgrade ein Freiheitsgrad einer Linearachse des Koordinatenmessgeräts (23) ist, wobei bei der Ermittlung des maximalen Betrages der Scanning-Geschwindigkeit Extrempunkte auf dem geschätzten Scanning-Weg berücksichtigt werden, die ein lokales Maximum der Ableitung des Betrages einer Koordinate nach dem Weg aufweisen, wobei die Koordinate eine Ortskoordinate ist, die bezüglich einer Koordinatenachse definiert ist, die die Linearachse ist oder die parallel zu der Linearachse verläuft, und wobei der maximale Betrag der Scanning-Geschwindigkeit so festgelegt wird, dass der Betrag der Geschwindigkeitskomponente bezüglich der Koordinatenachse in keinem der ermittelten Extrempunkte den maximalen Geschwindigkeitsbetrag des Freiheitsgrades überschreitet.

3. Verfahren nach Anspruch 1 oder 2, wobei zumindest ein Teil des geschätzten Scanning-Weges einen runden Verlauf aufweist, insbesondere kreisbogenförmig, helixförmig, spiralförmig, ellipsenbogenförmig oder oval ist.

4. Verfahren nach Anspruch 2 und Anspruch 3, wobei für den runden Verlauf eine geradlinige Achse definiert wird, die eine Rotationssymmetrieachse des Verlaufs oder einer Projektion des Verlaufs auf eine Ebene senkrecht zu der Rotationssymmetrieachse ist, und wobei die Extrempunkte berücksichtigt werden, indem das Kreuzprodukt eines Symmetrieachservektors in Richtung der Rotationssymmetrieachse mit einem Linearachsenvektor in Richtung der Linearachse gebildet wird.

5. Verfahren nach Anspruch 2 und nach einem der Ansprüche 3 bis 4, wobei die Extrempunkte für alle Freiheitsgrade berücksichtigt werden, wobei für jeden der Extrempunkte ein Tangentenvektor gebildet wird, der in Richtung der Tangente an dem Extrempunkt verläuft und wobei jeweils lediglich die Komponente des Tangentenvektors als Auswertungskomponente für die Berechnung des maximalen Betrages der Scanning-Geschwindigkeit verwendet wird, die bezüglich des Freiheitsgrades definiert ist, für den der Extrempunkt ermittelt wurde.

6. Verfahren nach Anspruch 5, wobei alle Tangentenvektoren auf einen gleichen Betrag normiert werden und wobei aus den Auswertungskomponenten der maximale Betrag der Scanning-Geschwindigkeit ermittelt wird.

7. Verfahren nach Anspruch 6, wobei aus den Auswertungskomponenten der normierten Tangentenvektoren und den maximalen Geschwindigkeitsbeträgen für die jeweils zugeordneten Freiheitsgrade ermittelt wird, welcher der maximalen Geschwindigkeitsbeträge der Freiheitsgrade den maximalen Betrag der Scanning-Geschwindigkeit limitiert.

8. Verfahren nach Anspruch 7, wobei die Beträge aller Auswertungskomponenten desselben Freiheitsgrades gebildet werden, die reziproken Werte der Beträge jeweils mit dem maximalen Geschwindigkeitsbetrag des zugeordneten Freiheitsgrades multipliziert werden und das Minimum der Multiplikationsergebnisse für die Bestimmung des maximalen Betrages der Scanning-Geschwindigkeit verwendet wird.

9. Koordinatenmessgerät (23) mit einem Tastelement (64) zum Antasten einer Werkstück-Oberfläche, wobei das Koordinatenmessgerät (23) ausgestaltet ist, mit der Oberfläche in Kontakt gebracht zu werden und unter Beibehaltung des Kontaktes entlang der Oberfläche in einer Scanning-Bewegung bewegt zu werden, wobei das Koordinatenmessgerät (23) eine Mehrzahl von voneinander unabhängigen Freiheitsgraden, z. B. Freiheitsgraden von Linearachsen, der möglichen Bewegungen des Tastelements (64) bezüglich dem Werkstück aufweist und wobei für die Freiheitsgrade maximale Geschwindigkeitsbeträge definiert sind, die das Maximum einer Bewegungsgeschwindigkeitskomponente des Tastelements (64) bezogen auf den jeweiligen Freiheitsgrad beschreiben, wobei das Koordinatenmessgerät (23) eine Geschwindigkeits-Ermittlungseinrichtung (31) aufweist, die ausgestaltet ist, für ein geplantes Scanning des Werkstücks einen geschätzten Scanning-Weg auszuwerten, wobei sich das Tastelement (64) beim Scanning auf dem Scanning-Weg bewegen soll, wobei der tatsächliche Scanning-Weg abhängig von tatsächlichen Abmessungen des Werkstücks von dem geschätzten Scanning-Weg abweichen kann, **dadurch gekennzeichnet, dass** die Geschwindigkeits-Ermittlungseinrichtung (31) ausgestaltet ist, unter Berücksichtigung der maximalen Geschwindigkeitsbeträge für die verschiedenen Freiheitsgrade einen maximalen Betrag der Scanning-Geschwindigkeit zu ermitteln, mit dem der geschätzte Scanning-Weg bei konstantem Betrag der Geschwindigkeit des Tastelements (64) durchfahren werden kann.

10. Koordinatenmessgerät nach dem vorhergehenden Anspruch, wobei die Geschwindigkeits-Ermittlungseinrichtung (31) ausgestaltet ist, das Verfahren nach einem der Verfahrensansprüche 2 bis 8 auszuführen.


**Claims**

1. Method for contacting a workpiece surface with the aid of a coordinate measuring machine (23),

    - in which a probe element (64) of the coordinate measuring machine (23) is brought into contact with the surface, and the probe element (64) is moved along the surface in a scanning movement while contact is maintained,
    - in which the coordinate measuring machine (23) has a plurality of mutually independent degrees of freedom, for example, degrees of freedom of linear axes, of the possible movements of the probe element with reference to the workpiece, and in which there are defined for the degrees of freedom maximum speed magnitudes that describe the maximum of a movement speed component of the probe element (64) referred to the respective degree of freedom,
    - in which for a planned scanning of the workpiece there is, or has been, prescribed, an estimated scanning path on which the probe element (64) is to move during scanning, and in which the actual scanning path can differ from the estimated scanning path as a function of the actual measurements of the workpiece,

    **characterized in that** by taking account of the maximum speed magnitudes for the various degrees of freedom, a maximum magnitude of the scanning speed is determined at which the estimated scanning path can be traversed at a constant magnitude of the speed of the probe element (64).

2. Method according to Claim 1, in which at least one of the degrees of freedom is a degree of freedom of a linear axis of the coordinate measuring machine (23), in which account is being taken when determining the maximum magnitude of the scanning speed of extreme points on the estimated scanning path that have a local maximum of the derivative of the magnitude of a coordinate with respect to the path, in which the coordinate is a spatial coordinate that is defined with reference to a coordinate axis that is the linear axis or that runs parallel to the linear axis, and in which the maximum magnitude of the scanning speed is fixed such that the magnitude of the speed component with reference to the coordinate axis does not exceed the maximum speed magnitude of the degree of freedom at any of the extreme points determined.

3. Method according to Claim 1 or 2, in which at least a portion of the estimated scanning path has a round profile, in particular having the shape of a circular arc, helix, spiral or ellipse, or being oval.

4. Method according to Claim 2 and Claim 3, in which there is defined for the round profile a rectilinear axis that is a rotational symmetry axis of the profile or is a projection of the profile on to a plane perpendicular to the rotational symmetry axis, and in which the extreme points are taken into account by forming the cross product of a symmetry axis vector in the direction of the rotational symmetry axis with a linear axis vector in the direction of the linear axis.

5. Method according to Claim 2 and according to one of Claims 3 to 4, in which the extreme points are taken into account for all degrees of freedom, in which for each of the extreme points a tangent vector is formed that runs in the direction of the tangent at the extreme point, and in which in each case only the component of the tangent vector is used as evaluation component to calculate the maximum magnitude of the scanning speed, which is defined with reference to the degree of freedom, for which the extreme point was determined.

**6.** Method according to Claim 5, in which all the tangent vectors are normalized to an equal magnitude, and in which the maximum magnitude of the scanning speed is determined from the evaluation components.

**7.** Method according to Claim 6, in which it is determined from the evaluation components of the normalized tangent vectors and the maximum speed magnitudes for the respectively assigned degrees of freedom which of the maximum speed magnitudes of the degrees of freedom limits the maximum magnitude of the scanning speed.

**8.** Method according to Claim 7, in which the magnitudes of all evaluation components of the same degree of freedom are formed, the reciprocal values of the magnitudes are respectively multiplied by the maximum speed magnitude of the assigned degree of freedom and the minimum of the multiplication results is used to determine the maximum magnitude of the scanning speed.

**9.** Coordinate measuring machine (23) having a probe element (64) for contacting a workpiece surface, in which the coordinate measuring machine (23) is designed to be brought into contact with the surface and to be moved along the surface in a scanning movement while contact is maintained, in which the coordinate measuring machine (23) has a plurality of mutually independent degrees of freedom, for example, degrees of freedom of linear axes, of the possible movements of the probe element (64) with reference to the workpiece, and in which there are defined for the degrees of freedom maximum speed magnitudes that describe the maximum of a movement speed component of the probe element (64) referred to the respective degree of freedom, in which the coordinate measuring machine (23) has a speed determining device (31) that is configured to evaluate an estimated scanning path for a planned scanning of the workpiece, in which the probe element (64) is to move during scanning on the scanning path, in which the actual scanning path can differ from the estimated scanning path as a function of actual measurements of the workpiece, **characterized in that** the speed determining device (31) is configured to determine, taking account of the maximum speed magnitudes for the various degrees of freedom, a maximum magnitude of the scanning speed at which the estimated scanning path can be traversed at a constant magnitude of the speed of the probe element (64).

**10.** Coordinate measuring machine according to the preceding claim, in which the speed determining device (31) is configured to execute the method according to one of the Method Claims 2 to 8.

**Revendications**

**1.** Procédé de balayage de la surface d'une pièce avec un appareil de mesure de coordonnées (23),

- un élément de balayage (64) de l'appareil de mesure de coordonnées (23) étant mis en contact avec la surface et l'élément de balayage (64) étant déplacé dans un mouvement de balayage le long de la surface en conservant le contact,
- l'appareil de mesure de coordonnées (23) présentant une pluralité de degrés de liberté indépendants les uns des autres, par exemple des degrés de liberté d'axes linéaires, des mouvements possibles de l'élément de balayage par rapport à la pièce et des valeurs de vitesses maximales, qui décrivent le maximum d'une composante de vitesse de mouvement de l'élément de balayage (64) par rapport au degré de liberté respectif, étant définies pour les degrés de liberté,
- une trajectoire de balayage estimée, sur laquelle l'élément de balayage (64) doit se déplacer lors de la scannérisation, étant prédéfinie pour une scannérisation planifiée de la pièce et la trajectoire de balayage effective pouvant différer de la trajectoire de balayage estimée en fonction des dimensions effectives la pièce,

**caractérisé en ce qu'**une valeur maximale de la vitesse de balayage, à laquelle la trajectoire de balayage estimée peut être parcourue à une valeur constante de la vitesse de l'élément de balayage (64), est déterminée en prenant en considération les valeurs de vitesses maximales pour les différents degrés de liberté.

**2.** Procédé selon la revendication 1, dans lequel au moins un des degrés de liberté est un degré de liberté d'un axe linéaire de l'appareil de mesure de coordonnées (23), dans lequel des points extrêmes sur la trajectoire de balayage estimée, qui présentent un maximum local de la dérivée de la valeur d'une coordonnée par rapport à la trajectoire, sont pris en compte lors de la détermination de la valeur maximale de la vitesse de balayage, dans lequel la coordonnée est une coordonnée de lieu, qui est définie par rapport à l'axe des coordonnées qui est l'axe linéaire ou s'étend parallèlement à l'axe linéaire, et dans lequel la valeur maximale de la vitesse de balayage est fixée de telle sorte que la valeur de la composante de vitesse par rapport à l'axe des coordonnées ne dépasse la valeur de vitesse maximale du degré de liberté en aucun des points extrêmes déterminés.

3. Procédé selon la revendication 1 ou 2, dans lequel au moins une partie de la trajectoire de balayage estimée présente une allure ronde, en particulier en arc de cercle, hélicoïdale, spiroïdale, elliptique ou ovale.

4. Procédé selon la revendication 2 et la revendication 3, dans lequel un axe rectiligne, qui est un axe de symétrie de révolution de l'allure ou d'une projection de l'allure sur un plan perpendiculaire à l'axe de symétrie de révolution, est défini pour l'allure ronde, et dans lequel les points extrêmes sont pris en compte, en formant le produit vectoriel entre un vecteur d'axe de symétrie dans le sens de l'axe de symétrie de révolution et un vecteur d'axe linéaire dans le sens de l'axe linéaire.

5. Procédé selon la revendication 2 et selon l'une quelconque des revendications 3 à 4, dans lequel les points extrêmes sont pris en considération pour tous les degrés de liberté, dans lequel un vecteur tangentiel, qui s'étend dans le sens de la tangente au niveau du point extrême, est formé pour chacun des points extrêmes et dans lequel respectivement seule la composante du vecteur tangentiel est utilisée comme composante d'évaluation pour le calcul de la valeur maximale de la vitesse de balayage, qui est définie par rapport au degré de liberté pour lequel le point extrême a été défini.

6. Procédé selon la revendication 5, dans lequel tous les vecteurs tangentiels sont normalisés sur une même valeur et dans lequel la valeur maximale de la vitesse de balayage est déterminée à partir des composantes d'évaluation.

7. Procédé selon la revendication 6, dans lequel on détermine à partir des composantes d'évaluation des vecteurs tangentiels normés et des valeurs de vitesses maximales pour les degrés de liberté respectivement associés, laquelle des valeurs de vitesses maximales des degrés de liberté limite la valeur maximale de la vitesse de balayage.

8. Procédé selon la revendication 7, dans lequel les valeurs de toutes les composantes d'évaluation du même degré de liberté sont formées, les valeurs inverses des valeurs sont respectivement multipliées par la valeur de vitesse maximale du degré de liberté associé et le minimum des résultats de multiplication est utilisé pour déterminer la valeur maximale de la vitesse de balayage.

9. Appareil de mesure de coordonnées (23) avec un élément de balayage (64) pour le balayage de la surface d'une pièce, dans lequel l'appareil de mesure de coordonnées (23) est configuré pour être mis en contact avec la surface et déplacé dans un mouvement de balayage le long de la surface en conservant le contact, l'appareil de mesure de coordonnées (23) présentant une pluralité de degrés de liberté indépendants les uns des autres, par exemple des degrés de liberté d'axes linéaires, des mouvements possibles de l'élément de balayage (64) par rapport à la pièce et des valeurs de vitesses maximales, qui décrivent le maximum d'une composante de vitesse de mouvement de l'élément de balayage (64) par rapport au degré de liberté respectif, étant définies pour les degrés de liberté, l'appareil de mesure de coordonnées (23) présentant un dispositif de détermination de la vitesse (31) qui est configuré pour évaluer une trajectoire de balayage estimée pour une scannérisation planifiée de la pièce, l'élément de balayage (64) devant se déplacer sur la trajectoire de balayage lors de la scannérisation, la trajectoire de balayage effective pouvant différer de la trajectoire de balayage estimée en fonction des dimensions effectives de la pièce, **caractérisé en ce que** le dispositif de détermination de la vitesse (31) est configuré pour déterminer une valeur maximale de la vitesse de balayage, à laquelle la trajectoire de balayage estimée peut être parcourue à une valeur constante de la vitesse de l'élément de balayage (64), en prenant en considération les valeurs de vitesses maximales pour les différents degrés de liberté.

10. Appareil de mesure de coordonnées selon l'une quelconque des revendications précédentes, dans lequel le dispositif de détermination de la vitesse (31) est configuré pour réaliser le procédé selon l'une quelconque des revendications 2 à 8.

Fig.1

Fig. 2

Fig. 3

Fig. 4

EP 2 010 864 B1

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3523188 A